# EUROPEAN PATENT APPLICATION

(11) **EP 4 826 363 A1**
(43) Date of publication of application: **21.10.2026**
(21) Application number: 24914830.5
(22) Date of filing: 20.08.2024
(51) Int. Cl.: G01N 21/88, G01N 21/01

(54) **WELDING TESTING SYSTEM AND DEFECT DETECTION METHOD**

(30) Priority: 02.01.2024 CN 202410001433
(71) Applicant: Contemporary Amperex Technology Co., Limited, Ningde, Fujian 352100 (CN)
(72) Inventor: SHEN, Ziyang, Ningde, Fujian 352100 (CN); JIANG, Ping, Ningde, Fujian 352100 (CN); QI, Lei, Ningde, Fujian 352100 (CN); LU, Gaofeng, Ningde, Fujian 352100 (CN)
(74) Representative: Kraus & Lederer PartGmbB
(86) International application number: PCT/CN2024/113292
(87) International publication number: WO 2025/145608

(57) **Abstract**

A welding testing system and a defect detection method. The welding testing system comprises a welding mechanism and a first testing mechanism (1); the welding mechanism is used for welding a casing and a top cover of a battery cell (01) together; the first testing mechanism (1) is arranged downstream of the welding mechanism; the first testing mechanism (1) comprises a support assembly (11), a planar imaging assembly (12), and a processing assembly; the planar imaging assembly (12) is mounted to the support assembly (11); the planar imaging assembly (12) is used for capturing a planar image at a welding pass; and the processing assembly is used for acquiring the planar image and determining, on the basis of the planar image, whether the welding pass is standard-compliant. The planar imaging assembly (12) comprises imaging units (121); each imaging unit (121) comprises a camera (1211) and a reflective mirror (123); the camera (1211) and the testing position of the first testing mechanism (1) are located on the same side of the reflective mirror (123); a lens of the camera (1211) faces the reflective mirror (123); and when the battery cell (01) is located at the testing position, the camera (1211) captures an image of the welding pass reflected by the reflective mirror (123).

## Description

### CROSS-REFERENCE TO RELATED APPLICATIONS

The present disclosure is filed based on and claims priority to Chinese Patent Application 202410001433.2, entitled "WELDING TESTING SYSTEM AND DEFECT DETECTION METHOD" filed with the Chinese Patent Office on January 02, 2024, which is incorporated by reference in the present disclosure.

### TECHNICAL FIELD

The present disclosure relates to the technical field of batteries, and particularly relates to a welding testing system and a defect detection method.

### BACKGROUND

New energy batteries are more and more widely used in life and industry, for example, new energy automobiles equipped with batteries have been widely used, and batteries are increasingly used in the field of energy storage.

During assembling battery cells, it is needed to weld a case and a top cover, and in order to ensure the quality of the battery cells, it is needed to test a weld bead between the case and the top cover.

In relevant technologies, it is often achieved by capturing 3D images of the weld bead and analyzing weld bead regions in the 3D images, and if there is height information showing that a weld bead surface is higher or lower than a reference position and outside a testing specification, it is determined that the weld bead has defects.

However, the above method may have omissions in weld bead defects, resulting in low accuracy in weld bead testing.

### SUMMARY OF THE INVENTION

In view of this, the present disclosure provides a welding testing system and a defect detection method, aiming to improve the accuracy of weld bead testing and reduce the risk of misjudgment of a weld bead.

The present disclosure is implemented through the following technical solution.

In a first aspect, the present disclosure provides a welding testing system. The welding testing system includes a welding mechanism and a first testing mechanism. The welding mechanism is configured to weld a case and a top cover of a battery cell together. The first testing mechanism is arranged downstream of the welding mechanism and is configured to test a weld bead between the welded battery case and top cover. The first testing mechanism includes a support assembly, a planar imaging assembly, and a processing assembly; the planar imaging assembly is mounted to the support assembly and is configured to capture a planar image at a weld bead; the processing assembly is configured to acquire the planar image and determine whether the weld bead is qualified on the basis of the planar image. The planar imaging assembly includes an imaging unit; the imaging unit includes a camera and a reflective mirror; the camera and a testing position of the first testing mechanism are located on the same side of the reflective mirror; a lens of the camera faces the reflective mirror; and if the battery cell is at the testing position, the camera captures a reflective image of the weld bead reflected by the reflective mirror.

In the welding testing system provided in the embodiment of the present disclosure, the planar imaging assembly is utilized to capture the planar image of the weld bead, and on this basis, the processing assembly is utilized to analyze the planar image of the weld bead to determine whether the weld bead is qualified. Compared with the related technology for determining whether the weld bead is qualified based on height information in a 3D image, in this embodiment of the present disclosure, it is analyzed based on grayscale features of different regions of the planar image, thereby effectively identifying defects of the weld bead, especially a roller-pressed weld bead. Therefore, the welding testing system provided in this embodiment of the present disclosure improves the accuracy in weld bead testing and reduce the risk of misjudging the weld bead. Moreover, the reflective mirror is utilized to perform reflective imaging on the weld bead, and the camera and the testing position are located on the same side of the reflective mirror, such that the space occupied by the planar imaging assembly is reduced, and it facilitates the arrangement of the first testing mechanism.

In one possible embodiment of the present disclosure, the imaging unit further includes a supplementary lighting component which is configured to provide supplementary lighting for the weld bead.

In another possible embodiment of the present disclosure, the welding testing system further includes a conveying mechanism which is configured to convey the battery cell to the testing position and to convey the tested battery cell out from the testing position.

In one possible embodiment of the present disclosure, the supplementary lighting component includes a first light-emitting member, the imaging unit further includes a first driving member, a fixed end of the first driving member is fixedly connected to the support assembly, and an output end of the first driving member is connected to the first light-emitting member; the first driving member is configured to switch the first light-emitting member between a supplementary lighting position and a clearance position; at the supplementary lighting position, the first light-emitting member extends into a conveying path of the battery cell to provide supplementary lighting for the weld bead; and at the clearance position, the first light-emitting member is retracted from the conveying path of the battery cell to provide clearance for the conveying of the battery cell.

In one possible embodiment of the present disclosure, the conveying mechanism includes a second driving member, a conveying member, and a first position detection module; the second driving member is configured to drive the conveying member to operate, the conveying member is configured to convey the battery cell, and the first position detection module is configured to detect the position of the battery cell; the first position detection module and the second driving member are electrically connected to the processing assembly; and the processing assembly is also configured to control the imaging units and the second driving member to operate based on the position of the battery cell.

In one possible embodiment of the present disclosure, if the battery cell is at the testing position, the processing assembly controls the first driving member to drive the first light-emitting member to the supplementary lighting position and controls the second driving member to stop operating, the processing assembly controls the supplementary lighting component to provide supplementary lighting for the weld bead and controls the camera to capture the weld bead; and after the planar imaging assembly captures the weld bead, the processing assembly controls the first driving member to drive the first light-emitting member to the clearance position, while the processing assembly controls the second driving member to continue to operate.

In one possible embodiment of the present disclosure, the support assembly includes a vertical support column arranged vertically, an upper mounting bracket and a lower mounting bracket which are arranged on the vertical support column; the upper mounting bracket is equipped with the planar imaging assembly, and the lower mounting bracket is equipped with a conveying mechanism.

In one possible embodiment of the present disclosure, the upper mounting bracket includes a first mounting bracket and a camera mounting bracket; the first mounting bracket is fixedly connected to the vertical support column, and the camera mounting bracket is fixedly connected to the first mounting bracket; the first driving member is mounted to the first mounting bracket and is configured to drive the first light-emitting member to move vertically; the reflective mirror is fixedly connected to a lower end of the first mounting bracket; and the conveying mechanism is configured to convey the battery cell horizontally.

In one possible embodiment of the present disclosure, the upper mounting bracket further includes a second mounting bracket which is fixedly connected to the lower end of the camera mounting bracket;
the supplementary lighting component further includes a second light-emitting member and a third light-emitting member; the second light-emitting member extends horizontally and is mounted at the lower end of the second mounting bracket; there are two third light-emitting members, which extend vertically and are mounted at an interval below the second light-emitting member; and a space between the two third light-emitting members and the second light-emitting member forms the conveying path for the battery cell.

In one possible embodiment of the present disclosure, the first light-emitting member, the second light-emitting member, and the third light-emitting member all have a planar light-emitting surface.

In one possible embodiment of the present disclosure, a first adjustment structure is arranged between the first driving member and the first mounting bracket, and the first driving member adjusts the position vertically through the first adjustment structure; and/or, a second adjustment structure is arranged between the second mounting bracket and the camera mounting bracket, and the second mounting bracket adjusts the position vertically through the second adjustment structure.

In one possible embodiment of the present disclosure, a third adjustment structure is arranged between the camera and the camera mounting bracket, and the camera adjusts the position along a lens orientation of the camera through the third adjustment structure; and/or, a fourth adjustment structure is arranged between the reflective mirror and the first mounting bracket, and the reflective mirror adjusts the position vertically through the fourth adjustment structure.

In one possible embodiment of the present disclosure, a fifth adjustment structure is arranged between the third light-emitting member and the second light-emitting member, and the third light-emitting member adjusts the position horizontally through the fifth adjustment structure.

In one possible embodiment of the present disclosure, the planar imaging assembly includes imaging modules, each imaging module includes two imaging units, the two imaging units are symmetrically arranged along a first direction and corresponding to the weld beads at both ends of the battery cell along the first direction, and the first direction refers to the extension direction of the conveying path of the battery cell.

In one possible embodiment of the present disclosure, the planar imaging assembly includes at least two imaging modules, and the imaging modules are arranged along a second direction to simultaneously test the weld beads of at least two battery cells; and the second direction is perpendicular to the first direction.

In one possible embodiment of the present disclosure, the imaging units located on the same side in all the imaging module along the first direction share the first light-emitting member and the second light-emitting member.

In one possible embodiment of the present disclosure, the welding testing system further includes an attitude adjustment mechanism, and the attitude adjustment mechanism is arranged between the welding mechanism and the first testing mechanism and is configured to adjust an attitude of the battery cell into the attitude required by the first testing mechanism to test the battery cell.

In one possible embodiment of the present disclosure, the testing mechanism further includes a first identification assembly which is configured to acquire identification information of the battery cell; and the first identification assembly is electrically connected to the processing assembly, and the processing assembly is also configured to match the identification information of the battery cell with the testing result for the weld bead.

In one possible embodiment of the present disclosure, the welding testing system further includes a second testing mechanism, and the second testing mechanism is arranged downstream of the first testing mechanism and is equipped with a waste discharge mechanism; the second testing mechanism includes a second identification assembly which is electrically connected to the processing assembly; before the second testing mechanism tests the battery cell, the second identification assembly confirms the identification information of the battery cell; and if the weld bead corresponding to the identification information of the battery cell does not pass the test, the processing assembly controls the second testing mechanism not to test the battery cell, and the battery cell is discharged through the waste discharge mechanism.

In a second aspect, the present disclosure provides a defect detection method, which is applied to a welding testing system, and the welding testing system includes: a welding mechanism and a first testing mechanism;
the first testing mechanism is arranged downstream of the welding mechanism, in which, the first testing mechanism includes a support assembly, a planar imaging assembly, and a processing assembly; the planar imaging assembly is mounted on the support assembly, and the planar imaging assembly includes an imaging unit; the imaging unit includes a camera and a reflective mirror, the camera and a testing position of the first testing mechanism are located on the same side of the reflective mirror, and a lens of the camera faces the reflective mirror; the processing assembly includes a vision upper computer and a controller;
the method includes:
   if the battery cell reaches the first testing mechanism, transmitting an in-position signal to the vision upper computer by the controller based on the position information of the battery cell acquired by the first position detection module;
   controlling the supplementary lighting component of the camera in the first testing mechanism to provide supplementary lighting and controlling the camera to take a picture by the vision upper computer, so as to obtain a planar image of a weld bead, and performing defect detection on the planar image to determine the testing result for the weld bead.

In the above solution, the welding testing system further includes: an attitude adjustment mechanism; the first testing mechanism includes: a first identification assembly;
the method further includes:
conveying the battery cell to the attitude adjustment mechanism by the conveying mechanism, and after flipping the battery cell into position by the attitude adjustment mechanism, transmitting control information to the vision upper computer;
conveying the battery cell to the first testing mechanism through the conveying mechanism; and
controlling the first identification assembly by the vision upper computer to scan a code, so as to acquire the identification information of the battery cell.

It is to be understood that, by means of the steps of conveying the battery cell to the attitude adjustment mechanism by the conveying mechanism, and after flipping the battery cell into position by the attitude adjustment mechanism, transmitting control information to the vision upper computer, and controlling the first identification assembly by the vision upper computer to scan a code, so as to acquire the identification information of the battery cell, the identification information of the battery cell is conveniently updated subsequently.

In the above solution, the welding testing system includes: a production control device;
the method further includes:
displaying the testing result for the battery cell and transmitting the testing result for the battery cell to the production control device by the vision upper computer;
reading the identification information of the battery cell by the production control device; and
based on the testing result for the battery cell and the identification information of the battery cell, updating the identification information of the battery cell to obtain a product identification code carrying the testing result.

It is to be understood that by means of the steps of displaying the testing result for the battery cell and transmitting the testing result for the battery cell to the production control device by the vision upper computer, reading the identification information of the battery cell by the production control device, and based on the testing result for the battery cell and the identification information of the battery cell, updating the identification information of the battery cell to obtain a product identification code carrying the detection result, the second testing mechanism conveniently scans codes to acquire the testing results.

In the above solution, the welding testing system includes: a second testing mechanism; the second testing mechanism is located on the conveying mechanism and behind the first testing mechanism;
the method further includes:
if the battery cell is conveyed to the second testing mechanism by the conveying mechanism, determining the processing on the battery cell by the second testing mechanism based on the testing result for the battery cell.

It is to be understood that by means of the step of if the battery cell is conveyed to the second testing mechanism by the conveying mechanism, determining the processing on the battery cell by the second testing mechanism based on the testing result for the battery cell, missed battery cells is effectively inspected, thus preventing NG (non-conforming) battery cells from continuously moving downstream to cause safety risks.

In the above solution, the if the battery cell is conveyed to the second testing mechanism by the conveying mechanism, determining the processing on the battery cell by the second testing mechanism based on the testing result for the battery cell includes:
if the battery cell is conveyed to the second testing mechanism by the conveying mechanism, scanning the product identification code of the battery cell by the second testing mechanism to obtain an abnormal result or normal result for the battery cell;
according to the abnormal result for the battery cell, discharging the battery cell from the waste discharge mechanism of a helium leak tester; or,
according to the normal result for the battery cell, performing helium leak test on the battery cell.

It is to be understood that by means of the steps of scanning the product identification code of the battery cell by the second testing mechanism to obtain an abnormal result or normal result for the battery cell, according to the abnormal result for the battery cell, discharging the battery cell from the waste discharge mechanism of a helium leak tester, or, according to the normal result for the battery cell, performing helium leak test on the battery cell, the missed battery cells is effectively inspected, thus preventing the NG battery cells from continuously moving downstream to cause safety risks.

In the above solution, the method further includes:
if the battery cell reaches the first testing mechanism, triggering the first driving member by the controller to extend so as to block the sliding of the battery cell, the first driving member being located on the conveying mechanism; and
if the battery cell does not reach the first testing mechanism, triggering the first driving member by the controller to retract to slide the battery cell.

It is to be understood that by means of the step of if the battery cell reaches the first testing mechanism, triggering the first driving member by the controller to extend so as to block the sliding of the battery cell, the battery cell is fixed, thus facilitating subsequent image collection of the battery cell, and improving the image quality of the battery cell.

In the above solution, a first through-beam sensor in the first position detection module is arranged near the attitude adjustment mechanism; a second through-beam sensor is arranged in the middle of a detection station;
the method further includes:
if the battery cell just reaches the first testing mechanism, acquiring first sub-sensor information by the first through-beam sensor;
continuously moving the battery cell until completely reaching the first testing mechanism, acquiring second sub-sensor information by the second through-beam sensor, and both the first sub-sensor information and second sub-sensor information belonging to the position information of the battery cell.

It is to be understood that by means of the steps of if the battery cell just reaches the first testing mechanism, acquiring first sub-sensor information by the first through-beam sensor, and continuously moving the battery cell until completely reaching the first testing mechanism, acquiring second sub-sensor information by the second through-beam sensor, it is determined that the battery cell is in position, thus facilitating subsequent image collection of the battery cell.

In the above solution, the performing defect detection on the planar image to determine the testing result for the weld bead includes:
performing image preprocessing on the planar image by the vision upper computer through a preset defect detection model so as to obtain at least one piece of defect information;
performing defect information fusion on the at least one piece of defect information to obtain fused information; and
based on the fused information, performing defect detection to determine the testing result for the weld bead.

It is to be understood that by means of the steps of performing image preprocessing on the planar image by the vision upper computer through a preset defect detection model so as to obtain at least one piece of defect information; performing defect information fusion on the at least one piece of defect information to obtain fused information, and based on the fused information, performing defect detection to determine the testing result for the weld bead, since the preset defect detection model is pre-trained, the planar image of the battery cell is detected to improve the accuracy of defect detection.

In the above solution, the method further includes:
acquiring the planar images of a plurality of weld bead samples by the vision upper computer;
performing preprocessing and defect annotation on the planar images of the plurality weld bead samples respectively to obtain corresponding sample defect information of the planar images of the plurality of weld bead samples; and
based on the corresponding sample defect information of the planar images of the plurality of weld bead samples, training an initial defect detection model to determine the preset defect detection model.

It is to be understood that by means of the steps of acquiring the planar images of a plurality of weld bead samples; performing preprocessing and defect annotation on the planar images of the plurality weld bead samples respectively to obtain corresponding sample defect information of the planar images of the plurality of weld bead samples, and based on the corresponding sample defect information of the planar images of the plurality of weld bead samples, training an initial defect detection model to determine the preset defect detection model, the testing accuracy of the preset defect detection model is improved.

In the above solution, the based on the corresponding sample defect information of the planar images of the plurality of weld bead samples, training an initial defect detection model to determine the preset defect detection model includes:
based on the corresponding sample defect information of the planar images of the plurality of weld bead samples, determining a mapping relationship between defects and detection specifications;
based on the mapping relationship between the defects and the detection specifications, performing defect learning on annotated images; and
based on the defect learning for the images and the corresponding sample defect information of the planar images of the plurality of weld bead samples, training the initial defect detection model to determine the preset defect detection model.

It is to be understood that by means of the steps of based on the corresponding sample defect information of the planar images of the plurality of weld bead samples, determining a mapping relationship between defects and detection specifications, based on the mapping relationship between the defects and the detection specifications, performing defect learning for the annotated images, and based on the defect learning for the images and the corresponding sample defect information of the planar images of the plurality of weld bead samples, training the initial defect detection model to determine the preset defect detection model, the model training is carried out based on the mapping relationship between the defects and the detection specifications and the annotated defect learning for the images, the testing accuracy of the preset defect detection model is improved.

In a third aspect, the present disclosure provides a welding testing system which includes: a welding mechanism and a first testing mechanism;
the first testing mechanism is arranged downstream of the welding mechanism, in which, the first testing mechanism includes a support assembly, a planar imaging assembly, and a processing assembly; the planar imaging assembly is mounted on the support assembly, and the planar imaging assembly includes an imaging unit; the imaging unit includes a camera and a reflective mirror, the camera and a testing position of the first testing mechanism are located on the same side of the reflective mirror, and a lens of the camera faces the reflective mirror; the processing assembly includes a vision upper computer and a controller;
the welding mechanism is configured to weld a battery case and a top cover of a battery cell together;
the controller is configured to transmit an in-position signal to the vision upper computer based on the position information of the battery cell acquired by the first position detection module when the battery cell reaches the first testing mechanism;
the vision upper computer is configured to: respond to the in-position signal, control a supplementary lighting component of the camera in the first testing mechanism to provide supplementary lighting and control the camera to take a picture, and perform defect detection on the planar image of a weld bead of the battery cell to determine a testing result for the weld bead.

The defect detection method provided in this embodiment of the present disclosure mainly includes: if the battery cell reaches the first testing mechanism, the controller transmitting the in-position signal to the vision upper computer based on the position information of the battery cell acquired by the first position detection module; the vision upper computer controlling the supplementary lighting component of the camera in the first testing mechanism to provide supplementary lighting and controlling the camera to take the pictures to obtain the planar image of the weld bead, and performing defect detection on the planar image to determine the testing result for the weld bead. In this process, by means of controlling the supplementary lighting component to provide supplementary lighting and controlling the camera to take a picture, better battery cell images is obtained, the missed battery cells is effectively inspected, thus preventing the NG battery cells from continuously moving downstream to cause safety risks, and improving the accuracy of defect detection.

### BRIEF DESCRIPTION OF THE DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the accompanying drawings:
FIG. 1 is a schematic layout diagram of some mechanisms of a welding testing system provided by an embodiment of the present disclosure (a protective cover);
FIG. 2 is a schematic layout diagram of some mechanisms of a welding testing system provided by an embodiment of the present disclosure (a protective cover not shown);
FIG. 3 is an overall schematic structural diagram of a first testing mechanism of a welding testing system provided by an embodiment of the present disclosure;
FIG. 4 is a partial structural schematic diagram of a first testing mechanism of a welding testing system provided by an embodiment of the present disclosure;
FIG. 5 is a schematic diagram of a conveying mechanism of a welding testing system provided by an embodiment of the present disclosure;
FIG. 6 is a top view of the first testing mechanism of a welding testing system provided by an embodiment of the present disclosure;
FIG. 7 is a partial structural schematic diagram of a first testing mechanism of a welding testing system provided by an embodiment of the present disclosure;
FIG. 8 is a partial structural schematic diagram of a first testing mechanism of a welding testing system provided by an embodiment of the present disclosure;
FIG. 9 is a schematic diagram of arrangement of an imaging unit of a first testing mechanism of a welding testing system provided by an embodiment of the present disclosure;
FIG. 10A is a schematic diagram of a missed product provided by an embodiment of the present disclosure;
FIG. 10B is a schematic diagram of a height map rendering effect of a battery cell provided by an embodiment of the present disclosure;
FIG. 10C is a schematic diagram of a grayscale rendering effect of a battery cell provided by an embodiment of the present disclosure;
FIG. 11 is an optional flowchart I of a defect detection method provided by an embodiment of the present disclosure;
FIG. 12 is an optional flowchart of a model training and application method provided by an embodiment of the present disclosure;
FIG. 13A is a schematic diagram of loading into an ROI box of a defect detection method provided by an embodiment of the present disclosure;
FIG. 13B is a schematic diagram of positioning a main body of a weld bead of a defect detection method provided by an embodiment of the present disclosure;
FIG. 13C is a schematic diagram of defect determination of a defect detection method provided by an embodiment of the present disclosure;
FIG. 14A is a schematic diagram I of testing results of a defect detection method provided by an embodiment of the present disclosure;
FIG. 14B is a schematic diagram II of testing results of a defect detection method provided by an embodiment of the present disclosure; and
FIG. 15 is an optional flowchart II of a defect detection method provided by an embodiment of the present disclosure.

### Reference numerals

1, first testing mechanism; 11; support assembly; 111, vertical support column; 112, upper mounting bracket; 1121, first mounting bracket; 11211, first adjustment structure; 11212, fourth adjustment structure; 1122, camera mounting bracket; 11221, first extension wall; 11222, second extension wall; 11223, third adjustment structure; 1123, second mounting bracket; 11231, second adjustment structure; 113, lower mounting bracket; 12, planar imaging assembly; 121, imaging unit; 1211, camera; 1212, supplementary lighting component; 12121, first light-emitting member; 12122, second light-emitting member; 121221, fifth adjustment structure; 12123, third light-emitting member; 122, first driving member; 123, reflective mirror; 13, first identification assembly; 2, conveying mechanism; 21, second driving member; 22, conveying member; 3, attitude adjustment mechanism; 31, flipping mechanism; 4, second testing mechanism; 41, second identification assembly; and 01, battery cell.

### DETAILED DESCRIPTION

Embodiments of the technical solutions of the present application will be described in detail below with reference to the accompanying drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art belonging to the technical field of the present disclosure. The terms used herein are intended only for the purpose of describing specific embodiments and are not intended to limit the present disclosure. The terms "including" and "having" and any variations thereof in the specification of the present disclosure and in the description of drawings above are intended to cover non-exclusive inclusion.

In the description of the embodiments of the present disclosure, the technical terms "first", "second", "third", and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present disclosure, the orientation or position relationships indicated by the technical terms "length", "width", "thickness", "up", "down", "front", "back", "left", "right", "vertical", "horizontal", "top", "bottom", "inside", "outside", "circumferential" and the like are based on the orientation or position relationships shown in the drawings, and are only for convenience and simplification of the description of the embodiments of the present disclosure, but do not indicate or imply that the apparatuses or elements referred to must have particular orientations, be constructed, operated or used in particular orientations, and therefore are not construed as a limitation of the embodiments of the present disclosure.

In the description of the embodiments of the present disclosure, unless otherwise expressly specified and limited, the technical terms "mounting," "connected," "connecting," "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present disclosure is understood according to specific situations.

In the description of the embodiments of the present disclosure, unless otherwise expressly specified and defined, the technical term "contact" shall be understood in a broad sense, either as direct contact, as contact across an intermediate medium layer, as contact between the two in contact that is substantially free of interaction force, or as contact with interaction force between the two in contact.

In the following, the present disclosure will be described in detail.

At present, new energy batteries are increasingly used in daily life and industry. New energy batteries are not only applied in energy storage power supply systems such as water power, fire power, wind power, and solar power stations, but also widely applied in electric transportation tools, such as electric bicycles, electric motorcycles and electric vehicles, as well as many fields such as aerospace. With the continuous expansion of the application field of power batteries, the demand in the market is also constantly expanding.

In many application scenarios, a plurality of battery cells are arranged and combined to form a battery pack for use, which increases the capacity of the battery pack; and generally, for the sake of convenience in description, the battery in the embodiments of the present disclosure generally refers to the battery pack or a battery module.

It is to be noted that the battery in the embodiment of the present disclosure is used, but is not limited to, in electrical apparatuses such as energy storage power systems, vehicles, ships, or aircraft. Moreover, the battery pack or the battery module is formed by placing a plurality of grouped battery cells in a sealed box, which provides more reliable dust-proof and waterproof performance, and the battery pack or the battery module is applied in harsher, more humid, or even submerged usage scenarios.

The embodiment of the present disclosure provides an electrical apparatus including the abovementioned battery or battery pack for supplying electric energy; and the electrical apparatus includes, but is not limited to, a mobile phone, tablet, laptop, electric toy, power tool, electric bicycle, electric vehicle, ship, spacecraft, and the like. The electric toys include a fixed or mobile electric toy, such as a game machine, an electric automobile toy, an electric ship toy and an electric aircraft toy, and the spacecraft includes an aircraft, a rocket, a space shuttle, a spacecraft and the like.

In the following embodiments, for the sake of illustration, the electrical apparatus in an embodiment of the present disclosure is exemplified by a vehicle. The following explanation is combined with the attached diagram.

The vehicle may be a fuel vehicle, a gas vehicle or a new energy vehicle, and the new energy vehicle may be a pure electric vehicle, a hybrid electric vehicle or an extended-range vehicle and the like. A battery is provided inside the vehicle and may be arranged at the bottom or head or tail of the vehicle. The battery may be used to power the vehicle. For example, the battery may be used as an operating power source of the vehicle. The vehicle further includes a controller and a motor, and the controller is configured to control the battery to supply power to the motor, for example, the controller is configured to meet the working power consumption requirements of the vehicle in starting, navigation and driving.

In some embodiments of the present disclosure, the battery is used as an operation power supply of the vehicle, is also used as a driving power supply of the vehicle, and replaces or partially replaces fuel oil or natural gas to provide driving power for the vehicle.

The battery includes a bottom plate, a cover, an upright plate, and at least one battery cell; the cover is placed over the bottom plate, thereby forming an accommodating space for the battery cell between the bottom plate and the cover.

In the battery, there may be a plurality of battery cells which are connected in series or in parallel or in series-parallel, and the series-parallel connection refers to that the plurality of battery cells are connected in series and in parallel. The plurality of battery cells are directly connected in series or in parallel or in series-parallel connection, and then the whole body formed by the plurality of battery cells is accommodated in the accommodating space formed by the bottom plate and the cover; definitely, the battery is also in a form of a battery module formed by connecting the plurality of battery cells in series or in parallel or in series-parallel connection; and a plurality of batteries modules are connected in series or in parallel or in series-parallel connection as a whole and are accommodated in the accommodating space formed by the bottom plate and the cover. The battery also includes other structures, for example, the battery also includes busbar components for realizing electrical connection between the plurality of battery cells.

In the embodiments of the present disclosure, the battery cell may be a secondary battery. The secondary battery refers to a battery cell that is charged to activate the active material and continue to be used after the battery cell is discharged.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like, which is not limited in the embodiments of the preset disclosure.

Although not shown in the figures, the battery cell generally includes an electrode assembly. The electrode assembly includes a positive electrode, a negative electrode and a spacer. In the charging and discharging process of the battery cell, active ions (such as lithium ions) are intercalated and de-intercalated between the positive electrode and the negative electrode in a reciprocating manner. The spacer is arranged between the positive electrode and the negative electrode, may play a role in preventing the positive electrode and the negative electrode from being short-circuited, and may enable active ions to pass through.

In some embodiments, the electrode assembly is provided with a tab, and the tab may lead current out of the electrode assembly. The tabs include a positive tab and a negative tab.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell is a cylindrical battery cell, a prismatic battery cell, a pouch battery cell, or a battery cell in other shapes; the prismatic battery cell includes a square-case battery cell, a blade-shaped battery cell, a polygon prism shaped battery, such as a hexagonal prism battery, and there is no special limitation in this embodiment of the present disclosure.

During assembling battery cells, it is needed to weld a case and a top cover, and in order to ensure the quality of the battery cells, it is needed to test a weld bead between the case and the top cover. In relevant technologies, it is often achieved by capturing 3D images of the weld bead and analyzing weld bead regions in the 3D images, and if there is height information showing that a weld bead surface is higher or lower than a reference position and outside a testing specification, it is determined that the weld bead has defects.

By way of example, in some related technologies, 3D line-scan cameras are utilized to move to scan the weld bead so as to obtain weld bead images with height information; and by analyzing these weld bead images, it is possible to detect defects on the weld bead surface exceeding specified height (such as pinholes, and blowout points).

However, in some battery production lines, a rolling mechanism is often arranged behind a welding mechanism. The rolling mechanism is configured to roll the weld bead between the case and top cover, at the moment, the weld bead will be flattened by a roller after welding. Consequently, defects such as pinholes and blowout points in an original weld bead will lose height information. The above method for determining the presence of weld bead defects based on height information above or below the reference position on the weld bead surface and outside the detection specifications may result in inaccurate weld bead test. Additionally, due to the limitations of 3D camera imaging principles, the grayscale features of 3D images of the weld bead captured by the 3D cameras are not obvious. All of these situations may lead to misjudgments of the weld bead defects.

In view of above, the embodiments of the present disclosure provide a welding testing system and a defect detection method.

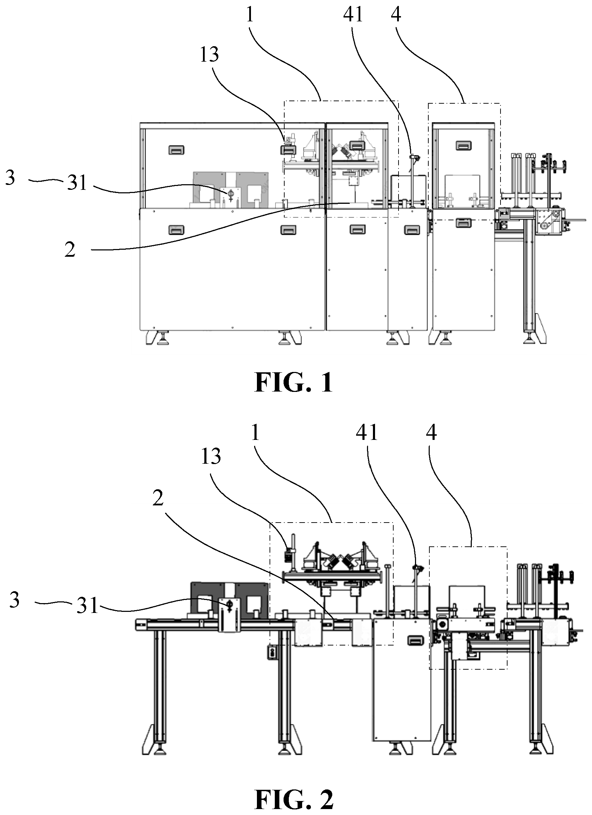

Some embodiments of the present disclosure will be described in detail below with reference to FIG. 1 to FIG. 15.

Specifically, with reference to FIG. 1, FIG. 2, and FIG. 3, the welding testing system provided by the embodiments of the present disclosure includes a welding mechanism and a first testing mechanism 1; the welding mechanism is configured to weld a case and a top cover of a battery cell 01 together; and the first testing mechanism 1 is arranged downstream of the welding mechanism and is configured to test a weld bead between the welded battery case and top cover. The first testing mechanism 1 includes a support assembly 11, a planar imaging assembly 12, and a processing assembly; the planar imaging assembly 12 is mounted to the support assembly 11 and is configured to capture a planar image at a weld bead; and the processing assembly 12 is configured to acquire the planar image and determine whether the weld bead is qualified on the basis of the planar image.

It is to be understood that, in addition to the welding mechanism and first testing mechanism 1, the welding testing system also includes other mechanisms.

In the embodiments of the present disclosure, a welding robot is used as the welding mechanism to weld the case and top cover according to a predetermined process.

It is to be noted that, in order to vividly illustrate the welding testing system provided by the embodiments of the present disclosure, a prismatic battery cell is taken as an example in the specification and the accompanying drawings for description.

It is to be understood that the case is provided with an accommodating chamber with an opening facing one side, and a cell is placed in the accommodating chamber. After the top cover is placed at the opening according to an assembly relationship, the case and top cover are welded by the welding mechanism.

Additionally, the first testing mechanism 1 is arranged downstream of the welding mechanism, that is, according to a movement direction of the battery cell 01 in the welding testing system, the first testing mechanism 1 is arranged downstream of the welding mechanism. The first testing mechanism 1 tests the weld beads between the case and top cover after welding.

It is to be noted that, for ease of description, all the weld beads between the welded battery case and top cover are collectively referred to as weld beads.

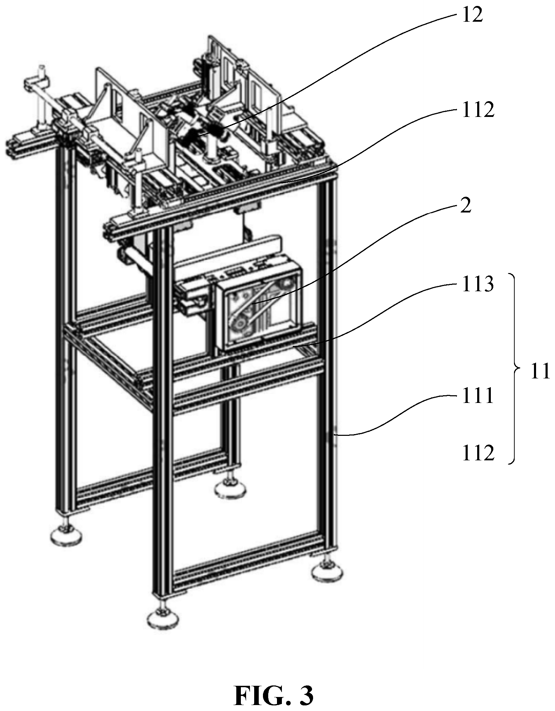

Further, the support assembly 11 provides a mounting foundation for the planar imaging assembly 12 and others; in the embodiments of the present disclosure, the specific structural form of the support assembly 11 is not limited. By way of example, with reference to FIG. 3, a plurality of cylindrical structures are spliced to form the support assembly 11, and then the planar imaging assembly 12 is mounted on the support assembly 11.

Additionally, for the processing assembly, it is mounted on the support assembly 11 or independently set and mounted at other locations, and it is not limited in the embodiments of the present disclosure.

Further, the planar imaging assembly 12 is configured to capture the planar image from the weld bead; and the position of the planar imaging assembly 12 is adapted to the position of the battery cell 01 during weld bead testing, thus enabling the planar imaging assembly 12 to capture the planar image of the weld bead.

It is to be noted that the planar image here is also considered a 2D image relative to the 3D image, and it is treated as that the planar image does not include the height information of the 3D image.

By way of example, a black-and-white area-array camera is configured to set the planar camera 12 in the embodiments of the present disclosure. More specifically, in the embodiments of the present disclosure, a 12-megapixel black-and-white area-array camera in combination with a 16mm prime lens is configured to set the planar camera 12 in the embodiments of the present disclosure.

Further, the first testing mechanism 1 of the welding testing system provided in the embodiments of the present disclosure further includes a processing assembly; the planar imaging assembly 12 is electrically connected to the processing assembly, and the processing assembly acquires the planar image of the weld bead captured by the planar imaging assembly 12 and determine whether the weld bead is qualified based on the planar image.

By way of example, for the planar image of the weld bead, the grayscale values at the defect part will differ significantly from other positions of the weld bead, so the weld bead is tested based on the grayscale values of different parts of the planar image and the corresponding morphology formed based on these grayscale values, so as to determine whether the weld bead is qualified.

It is to be noted that the type of the processing assembly is not limited in the embodiments of the present disclosure; by way of example, a programmable logic controller (PLC) is configured to set the processing assembly, or other settings with processing functions are utilized to set the processing assembly, for example, an industrial computer is utilized to set the processing assembly. Additionally, in the embodiments of the present disclosure, a decentralized control system is utilized to perform decentralized processing on the planar imaging assembly 12 and the planar images; specifically, the PLC is set for the planar imaging assembly 12, and an industrial computer is set for the planar image, and the industrial computer is also referred to as a host computer. In this way, the strong processing capability of the industrial computer is utilized to process the planar image of the weld bead captured by the planar imaging assembly 12, and the industrial computer is configured to transmit control signals to the PLC to control the planar imaging assembly 12.

By means of the above arrangement, in the welding testing system provided in the embodiment of the present disclosure, the planar imaging assembly 12 is utilized to capture the planar image of the weld bead, and on this basis, the processing assembly is utilized to analyze the planar image of the weld bead to determine whether the weld bead is qualified. Compared with the related technology for determining whether the weld bead is qualified based on height information in a 3D image, in this embodiment of the present disclosure, it is analyzed based on grayscale features of different regions of the planar image, thereby effectively identifying defects of the weld bead, especially a roller-pressed weld bead. Therefore, the welding testing system provided in this embodiment of the present disclosure improves the accuracy in weld bead testing and reduce the risk of misjudging the weld bead.

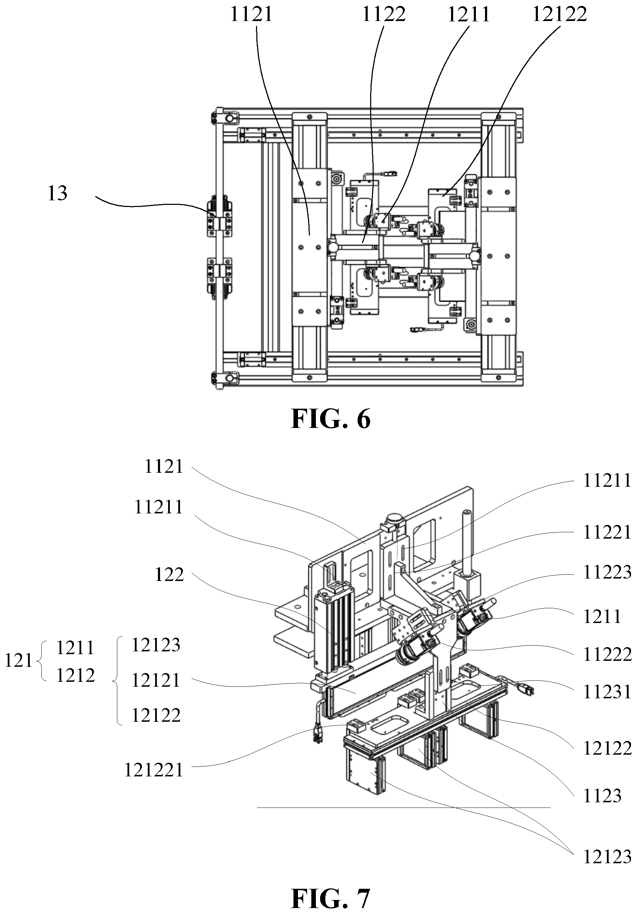

On this basis, with reference to FIG. 7, in the embodiments of the present disclosure, the planar imaging assembly 12 includes an imaging unit 121, the imaging unit 121 includes a camera 1211 and a supplementary lighting component 1212, the imaging unit 1211 is configured to capture the planar image of the weld bead, and the supplementary lighting component 1212 is configured to provide supplementary lighting for the weld bead.

It is to be noted that in the embodiments of the present disclosure, the specific structural type of the camera 1211 is not limited; by way of example, with reference to the previous description, the 12-megapixel monochrome area-array camera I combination with the 16mm prime lens is used as the camera 1211 in the embodiments of the present disclosure.

Further, the supplementary lighting component 1212 is configured to provide supplementary lighting for the weld bead, and flash or planar light sources is configured to provide supplementary lighting for the weld bead.

It is to be understood that in the embodiments of the present disclosure, the orientation of the supplementary lighting component 1212 is adapted to provide supplementary lighting for the weld bead.

By means of the above arrangement, the supplementary lighting component 1212 is utilized to provide supplementary lighting for the weld bead, thus the distinction between defect part of the weld bead and other parts is further improved, thereby improving the accuracy of defect detection in weld beads.

On this basis, with reference to FIG. 1, FIG. 2, and FIG. 3, the welding testing system provided in the embodiments of the present disclosure further includes a conveying mechanism 2 which is configured to convey the battery cell 01 to the testing position of the first testing mechanism 1 and to convey the tested battery cell 01 out from the testing position. When battery cell 01 is at the testing position, the camera 1211 captures the planar image of the weld bead.

By way of example, in the embodiments of the present disclosure, a conveyor belt is used as the conveying mechanism 2; specifically, the conveyor belt is arranged between the welding mechanism and the first testing mechanism 1, and the conveyor belt is extended downstream of the first testing mechanism 1. In this way, the battery cell 01 moves with the conveyor belt, and moves from the welding mechanism to the first testing mechanism 1, and continues downstream of the first testing mechanism 1.

It is to be understood that by controlling the conveying mechanism 2, the battery cell 01 is suspended at the welding position of the welding mechanism, and at the detection position for weld bead detection on the first testing mechanism 1.

It is to be noted that the testing position here refers to a position in which the planar imaging assembly 12 captures the planar image of the weld bead.

Specifically, a lens orientation of the camera 1211 of the planar imaging assembly 12 and the orientation of the supplementary lighting component 1212 are adapted so that the lens and supplementary lighting component 1212 face the weld bead when the battery cell 01 is in the testing position.

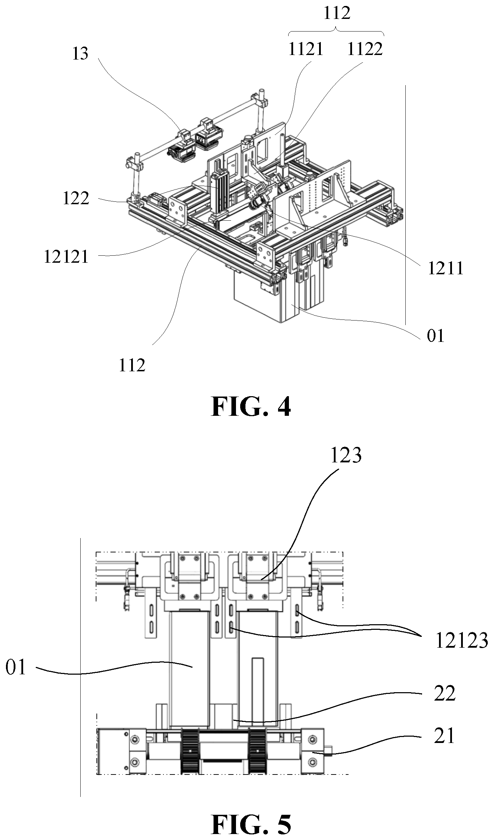

By way of example, with reference to FIG. 3 and FIG. 5, in some embodiments of the present disclosure, the conveying mechanism 2 is set as the conveyor belt to be arranged below the planar imaging assembly 12; and the conveyor belt is utilized to suspend battery cell 01 below the planar imaging assembly 12, thus the planar imaging assembly 12 captures the planar image of the weld bead.

By means of the above arrangement, in the welding testing system provided in the embodiments of the present disclosure, the conveying mechanism 2 is utilized to convey the battery cell 01, thus reducing manual operation and enhancing the intelligence level of the welding testing system.

On this basis, with reference to FIG. 7, in the embodiments of the present disclosure, the supplementary lighting component 1212 includes a first light-emitting member 12121, the imaging unit 121 further includes a first driving member 122, a fixed end of the first driving member 122 is fixedly connected to the support assembly 11, and an output end of the first driving member 122 is connected to the first light-emitting member 12121; the first driving member 122 is configured to switch the first light-emitting member 12121 between a supplementary lighting position and a clearance position. at the supplementary lighting position, the first light-emitting member 12121 extends into a conveying path of the battery cell 12121 to provide supplementary lighting for the weld bead; and at the clearance position, the first light-emitting member 12121 is retracted from the conveying path of the battery cell 01 to provide clearance for the conveying of the battery cell 01.

With reference to FIG. 7, it is to be understood that in the embodiments of the present disclosure, the first driving member 122 drives the first light-emitting member 12121 to move, thereby switching the first light-emitting member 12121 between the supplementary lighting position and the clearance position.

It is to be noted that in the embodiments of the present disclosure, the specific structural form of the first driving member 122 is not limited, and the first driving member 122 is configured as a driving member with a power source, such as a cylinder, hydraulic rod, or motor. By way of example, with reference to FIG. 7, in some embodiments of the present disclosure, the first driving member 122 is configured as the cylinder.

Additionally, a movement direction of the first driving member 122 driving the first light-emitting member 12121 is determined according to the conveying direction of the conveying mechanism 2 conveying the battery cell 01.

By way of example, with reference to FIG. 1, FIG. 2, and FIG. 3, it is described with an example that the conveying mechanism 2 conveys battery cell 01 horizontally and a short side of a prismatic battery is tested.

The conveying path of the battery cell 01 is considered as the extension direction in the length direction of the battery cell 01. With reference to FIG. 7, the movement direction of the first driving member 122 driving the first light-emitting member 12121 is set as a vertical direction. Specifically, the first driving member 122 is arranged above the conveying path of the battery cell 01 and configured to drive the first light-emitting member 12121 to move vertically.

During moving the battery cell 01 from the position with the welding mechanism to the testing position, the first driving member 122 drives the first light-emitting member 12121 to move vertically above the conveying path of the battery cell 01, thereby providing clearance for the conveying of the battery cell 01, and the clearance position of the first light-emitting member 12121 refers to a position of the first light-emitting member 12121 above the conveying path of the battery cell 01, as shown in FIG. 7.

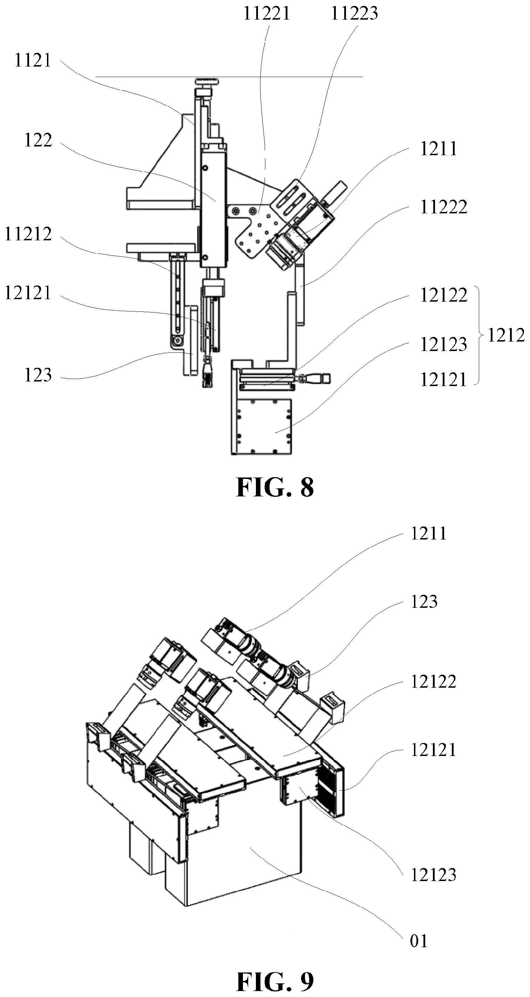

After the battery cell 01 moves to the testing position, the first driving member 122 drives the first light-emitting member 12121 to move vertically to the conveying path of the battery cell 01, and the first light-emitting member 12121 and battery cell 01 are oppositely placed on the side surfaces of the battery cell 01, and therefore, the first light-emitting member directly faces the battery cell 01 directly, thus facilitating supplementary lighting for weld beads. The supplementary lighting position of the first light-emitting member 12121 refers to a position of the first light-emitting member 12121 in the conveying path of the battery cell 01 and opposite to the battery cell 01, as shown in FIG. 9.

By means of the above management, in the welding testing system provided in the embodiments of the present disclosure, the first driving member 122 drives the first light-emitting member 12121 to move to achieve switching between the clearance position and the supplementary lighting position, thereby avoiding the impact of the first light-emitting member 12121 on the conveying to the battery cell 01; and moreover, the size of the first testing mechanism 1 is set to be small, thus improving the adaptability of the first testing mechanism 1 in the embodiments of the present disclosure.

On the basis of the above, with reference to FIG. 5, in some embodiments of the present disclosure, the conveying mechanism 2 includes a second driving member 21, a conveying member 22, and a first position detection module; the second driving member 21 is configured to drive the conveying member 22 to operate, the conveying member 22 is configured to convey the battery cell 01, and the first position detection module is configured to detect the position of the battery cell 01; the first position detection module and the second driving member 21 are electrically connected to the processing assembly. The processing assembly is also configured to control the imaging unit 121 and the second driving member 21 to operate based on the position of the battery cell 01.

It is to be understood that in the embodiments of the present disclosure, the conveying member 22 is configured to directly convey the battery cell 01; by way of example, the conveying member 22 is set as a belt. The second driving member 21 is configured to drive the conveying member 22 to operate and is set as a motor.

Additionally, in the embodiments of the present disclosure, the first position detection module is configured to detect the position of the battery cell 01; the first detection module is set as a contact position sensor or a non-contact position sensor, which is not limited in the embodiments of the present disclosure. By way of example, in some embodiments of the present disclosure, the first position detection module is set as a through-beam photoelectric sensor.

Thus, in the embodiments of the present disclosure, by electrically connecting the driving member and the first position detection module to the processing assembly, the processing assembly controls the imaging unit 121 and the second driving member 21 to operate based on the position of the battery cell 01.

By way of example, the first position detection module is set corresponding to the testing position of the battery cell 01, and if the battery cell 01 moves to the testing position, a signal from the first position detection module is triggered. After receiving this signal, the processing assembly will transmit a command to stop the second driving member 21, at the moment, the battery cell 01 pauses in the testing position. At the same time, the processing assembly also transmit the command to the planar imaging unit 121 to capture the weld bead. After the planar imaging unit 121 captures the image of the weld bead, the processing assembly transmits the command to continue operating the second driving member 21, thereby continuing to convey the battery cell 01.

By means of the above arrangement, in the battery cell 01 provided in the embodiments of the present disclosure, the processing assembly controls the planar imaging assembly 12 and the conveying mechanism 2 to operate based on the position of the battery cell 01, such that the intelligence of the welding testing system provided in the embodiments of the present disclosure is further improved.

On the basis of the above, in some embodiments of the present disclosure, if the battery cell 01 is at the testing position, the processing assembly controls the first driving member 122 to drive the first light-emitting member 12121 to the supplementary lighting position and controls the second driving member 21 to stop operating, the processing assembly controls the supplementary lighting component 1212 to provide supplementary lighting for the weld bead and controls the camera 1211 to capture the weld bead; and after the planar imaging assembly 12 captures the weld bead, the processing assembly controls the first driving member 122 to drive the first light-emitting member 12121 to the clearance position, while the processing assembly controls the second driving member 21 to continue to operate.

It is to be understood that in the embodiments of the present disclosure, by electrically connecting the first driving member 122 to the processing assembly, the processing assembly is also utilized to control the operation of the first driving member 122.

Specifically, while determining that the battery cell 01 is at the testing position by the first position detection module, the processing assembly transmits the command to control the first driving member 122 to move the first light-emitting member 12121 to the supplementary lighting position, and the processing assembly transmits the command to stop the second drive member 21. Then, the processing assembly transmits a control command to control the fill supplementary lighting component 1212 to provide supplementary lighting for the weld bead, and control the camera 1211 to capture the weld bead.

After the planar imaging assembly 12 captures the weld bead, the processing assembly transmits the command to control the first driving member 122 to move the first light-emitting member 12121 to the clearance position, and the processing assembly transmits the command to control the second drive member 21 to continue to operate, thereby continuing to convey the battery cell 01.

By means of the above arrangement, in the welding testing system provided in the embodiments of the present disclosure, the processing assembly is utilized to interlock the operation of the first driving member 122, the second driving member 21, the camera 1211, and the supplementary lighting component 1212, thus further enhancing the intelligence level of the welding testing system in the embodiments of the present disclosure.

Additionally, with reference to FIG. 8 and FIG. 9, in some embodiments of the present disclosure, the planar imaging assembly 12 further includes a reflective mirror 123, the camera 1211 and the testing position are located on the same side as the reflective mirror 123, a lens of the camera 1211 faces the reflective mirror 123 and is configured to capture the reflection image of the weld bead reflected by the reflective mirror 123.

It is to be noted that in the embodiments of the present disclosure, the weld bead is reflectively imaged using the reflective mirror 123. The camera 1211 is utilized to capture the above reflective image, thus the planar image of the weld bead is also obtained.

Further, in the embodiments of the present disclosure, the size of the reflective mirror 123 is not limited; by way of example, the size of the reflective mirror 123 is set according to the length of the weld bead to be tested, and the size of the reflective mirror 123 is set smaller so that the reflective mirror 123 performs reflective imaging on the weld bead; additionally, the size of the reflective mirror 123 is set relatively large, but it is not limited in the embodiments of the present disclosure.

It is to be understood that, according to the principle of reflective imaging of the reflective mirror 123, it is needed to arrange the camera 1211 and the testing position on the same side as the reflective mirror 123; and moreover, the lens orientation of the camera 1211 is adaptively set, so that the camera 1211 captures the reflective image of the weld bead reflected by the reflective mirror 123.

By means of the above arrangement, in the welding testing system provided in the embodiments of the present disclosure, the reflective mirror 123 is utilized to reflectively image the weld beads, and the camera 1211 and the testing position are arranged on the same side of the reflective mirror 123, thus reducing the space occupied by the planar imaging assembly 12 and facilitating the arrangement to the first testing mechanism 1 provided in the embodiments of the present disclosure.

On the basis of the above, with reference to FIG. 3, in some embodiments of the present disclosure, the support assembly 11 includes vertical support columns 111 arranged vertically, an upper mounting bracket 112 and a lower mounting bracket 113 which are arranged on the vertical support columns 111; the upper mounting bracket 112 is equipped with the planar imaging assembly 12, and the lower mounting bracket 113 is equipped with a conveying mechanism 2.

By way of example, with reference to FIG. 3, in some embodiments of the present disclosure, the overall structural form of the support assembly 11 is arranged in a cubic shape, four posts extending vertically are utilized to form the vertical support columns 111.

Moreover, bracket-type structures is mounted at upper ends of the vertical support columns 111 to form the upper mounting bracket 112, and bracket-type structures is arranged at a lower end of the upper mounting bracket 112 on the vertical support columns 111 to form the lower mounting bracket 113.

In this way, the upper mounting bracket 112 is utilized to mount the planar imaging assembly 12, and the lower mounting bracket 113 is utilized to mount the conveying mechanism 2.

By means of the above arrangement, in the welding testing system provided in the embodiments of the present disclosure, the support assembly 11 includes the vertical support columns 111, the upper mounting bracket 112, and the lower mounting bracket 113, thus facilitating the assembling of the support assembly 11. Moreover, it also facilitates the mounting of the planar imaging assembly 12 and the conveying mechanism 2.

On the basis of the above, with reference to FIG. 4 and FIG. 6, in some embodiments of the present disclosure, the upper mounting bracket 112 includes a first mounting bracket 1121 and a camera mounting bracket 1122; the first mounting bracket 1121 is fixedly connected to the vertical support columns 111, and the camera mounting bracket 1122 is fixedly connected to the first mounting bracket 1121; the first driving member 122 is mounted to the first mounting bracket 1121 and is configured to drive the first light-emitting member 12121 to move vertically; and the reflective mirror 123 is fixedly connected to the lower end of the first mounting bracket 1121. The conveying mechanism 2 is configured to convey the battery cell 01 horizontally.

It is to be noted that, with reference to FIG. 4, in the embodiments of the present disclosure, a main structure of the first mounting bracket 1121 is arranged as a plate-shaped structure extending vertically, and the first mounting bracket 1121 is fixedly connected to the vertical support columns 111 via the posts.

Further, with reference to FIG. 4 and FIG. 7, the camera mounting bracket 1122 is also arranged as a right-angle structure. Specifically, with reference to FIG. 7, the camera mounting bracket 1122 includes a first extension wall 11221 extending horizontally and a second extension wall 11222 extending vertically; and one end of the first extension wall 11221 is fixedly connected to the first mounting bracket 1121, and the second extension wall 11222 is connected to the other end of the first extension wall 11221.

Additionally, with reference to FIG. 8, the reflective mirror 123 is fixedly connected to the lower end of the first mounting bracket 1121, and the camera 1211 is fixedly mounted at a position with an included angle between the first extension wall 11221 and the second extension wall 11222, so that the lens of the camera 1211 faces the reflective mirror 123.

Further, a fixed end of the first driving member 122 is connected to the first mounting bracket 1121 by a fastener; and by adjusting an output direction of an output shaft of the first driving member 122, the first driving member 122 drives the first light-emitting member 12121 to move vertically.

Thus, with reference to FIG. 8, once the first driving member 122 drives the first light-emitting member 12121 to move downward vertically, supplementary lighting is provided for the weld bead; and once the first driving member 122 drives the first light-emitting member 12121 to move upward in the vertical direction, a clearance is provided for the conveying of the battery cell 01.

By means of the above arrangement, in the battery cell 01 provided in the embodiments of the present disclosure, the structure of the upper mounting bracket 112 is simplified and arranged conveniently. Moreover, it facilitates the mounting of the first driving member 122, the first light-emitting member 12121, and the reflective mirror 123.

On the basis of above, with reference to FIG. 7 and FIG. 8, in some embodiments of the present disclosure, the upper mounting bracket 112 further includes a second mounting bracket 1123 which is fixedly connected to the lower end of the camera mounting bracket 1122. The supplementary lighting component 1212 further includes a second light-emitting member 12122 and a third light-emitting member 12123; the second light-emitting member 12122 extends horizontally and is mounted at the lower end of the second mounting bracket 1123. There are two third light-emitting members 12123, which extend vertically and are mounted at an interval below the second light-emitting member 12122; and a space between the two third light-emitting members 12123 and the second light-emitting member 12122 forms the conveying path for the battery cell 01.

By way of example, with reference to FIG. 8, in the embodiments of the present disclosure, the second mounting bracket 1123 is fixedly connected to the lower end of the second extension wall 11222. Additionally, a mounting plate extending horizontally is arranged at the lower end of the second mounting bracket 1123, and therefore, the second light-emitting member 12122 is mounted on a lower surface of the mounting plate.

Further, the two third light-emitting members 12123 are mounted below the second light-emitting member 12122 by the fasteners.

In this way, a gap is formed in a space between the two third light-emitting members 12123, and the gap is used as the conveying path for the battery cell 01. Moreover, the space between the two light-emitting members also forms the testing position for the battery cell 01.

Specifically, with reference to FIG. 8 and FIG. 9, in some embodiments of the present disclosure, once the first light-emitting member 12121 moves upward to reach the clearance position, the battery cell 01 is conveyed to be between the two third light-emitting members 12123.

If the battery cell 01 is at the testing position and the first light-emitting member 12121 moves downward and is in the testing position, the first light-emitting member 12121, the second light-emitting member 12122, and the third light-emitting member 12123 is utilized to provide supplementary lighting for the weld bead in all directions.

By means of the above arrangement, in the welding testing system provided in the embodiments of the present disclosure, the first light-emitting member 12121, the second light-emitting member 12122, and the third light-emitting member 12123 is utilized to provide supplementary lighting for the weld bead in all directions, which uniformly lights the weld bead without over-bursting, thereby further improving the testing accuracy of the weld bead.

On basis of the above, with reference to FIG. 9, in the embodiments of the present disclosure, the first light-emitting member 12121, the second light-emitting member 12122, and the third light-emitting member 12123 all have a planar light-emitting surface.

It is to be noted that, relative to a point light source, in the embodiments of the present disclosure, the first light-emitting member 12121, the second light-emitting member 12122, and the third light-emitting member 12123 form a planar light-emitting surface, that is, the first light-emitting member 12121, the second light-emitting member 12122, and the third light-emitting member 12123 form a surface light source.

By means of the above arrangement, the uniformity of lighting the weld beads by the first light-emitting member 12121, second light-emitting member 12122, and third light-emitting member 12123 is further improved, thus further enhancing the testing accuracy of the weld bead.

On basis of the above, with reference to FIG. 7, a first adjustment structure 11211 is arranged between the first driving member 122 and the first mounting bracket 1121, and the first driving member 122 adjusts the position vertically through the first adjustment structure 11211; and/or, a second adjustment structure 11231 is arranged between the second mounting bracket 1123 and the camera mounting bracket 1122, and the second mounting bracket 1123 adjusts the position vertically through the second adjustment structure 11231.

By way of example, with reference to FIG. 7, in the embodiments of the present disclosure, the first driving member 122 is fixedly connected to the first mounting bracket 1121 by the fastener; corresponding fastener connection holes in either the first driving member 122 or the first mounting bracket 1121 are arranged to be slotted holes, and thus the slotted holes are utilized to form the first adjustment structure 11211.

Additionally, with reference to FIG. 7, in the embodiments of the present disclosure, the second mounting bracket 1123 is fixedly connected to the camera mounting bracket 1122 by the fastener; the corresponding fastener connection holes in the second mounting member and the camera mounting bracket 1122 are arranged to be the slotted holes, and thus the slotted holes are utilized to form the second adjustment structure 11231.

It is to be noted that the first adjustment structure 11211 and the second adjustment structure 11231 are arranged into other forms with reference to the arrangement of the slotted holes. It is not limited in the embodiments of the present disclosure.

By means of the above arrangement, in the embodiments of the present disclosure, the position of the first driving member 122 relative to the first mounting bracket 1121 is adjusted, and the position of the second mounting bracket 1123 relative to the camera mounting bracket 1122 is adjusted, thereby expanding the applicable scope of the first testing mechanism 1 provided in the embodiments of the present disclosure and enabling the first testing mechanism 1 provided in the embodiments of the present disclosure to be suitable for the battery cells 01 of different models.

In addition, with reference to FIG. 7, in some embodiments of the present disclosure, a third adjustment structure 11223 is arranged between the camera 1211 and the camera mounting bracket 1122, and the camera 1211 adjusts the position along a lens orientation of the camera 1211 through the third adjustment structure 11223; and/or, a fourth adjustment structure 11212 is arranged between the reflective mirror 123 and the first mounting bracket 1121, and the reflective mirror 123 adjusts the position vertically through the fourth adjustment structure 11212.

It is to be noted that, with reference to FIG. 7, in the embodiments of the present disclosure, the camera 1211 is fixedly connected to the camera mounting bracket 1122 by the fasteners; the corresponding fastener connection holes in the camera 1211 and the camera mounting bracket 1122 are arranged to be slotted holes, and thus the above slotted holes are utilized to form the third adjustment structure 11223.

Additionally, with reference to FIG. 8, in the embodiments of the present disclosure, the reflective mirror 123 is fixedly connected to the first mounting bracket 1121 by the fastener; the corresponding fastener connection holes in the reflective mirror 123 and the first mounting bracket 1121 are arranged to be slotted holes, so that the slotted holes are utilized to form the fourth adjustment structure 11212.

By means of the above management, in the embodiments of the present disclosure, the position of the camera 1211 relative to the camera mounting bracket 1122 is adjusted, thus enabling the camera 1211 to adapt to lenses of different focal lengths. Additionally, in the embodiments of the present disclosure, the position of the reflective mirror 123 relative to the first mounting bracket 1121 is adjusted, thus enabling the reflective mirror 123 to adapt to the battery cells 01 of different models and specifications.

In addition, with reference to FIG. 7, in some embodiments of the present disclosure, a fifth adjustment structure 121221 is arranged between the third light-emitting member 12123 and the second light-emitting member 12122, and the third light-emitting member 12123 adjusts the position horizontally through the fifth adjustment structure 121221.

By way of example, with reference to FIG. 7, in some embodiments of the present disclosure, the third light-emitting member 12123 is fixedly connected to the second light-emitting member 12122 by the fasteners. A plurality of fastener holes are formed in the third light-emitting member 12123, and by adapting different fastener holes, the third light-emitting member 12123 is connected to different positions on the second light-emitting member 12122.

By means of the above arrangement, in the welding testing system provided in the embodiments of the present disclosure, the position of the third light-emitting member 12123 is adjusted horizontally, thereby adjusting the distance between two third light-emitting members 12123, and further enabling the first testing mechanism 1 provided in the embodiments of the present disclosure to be applicable to the battery cells 01 of different models and specifications.

Additionally, with reference to FIG. 7 and FIG. 9, in the welding testing system provided in the embodiments of the present disclosure, the planar imaging assembly 12 includes imaging modules, each imaging module includes two imaging units 121, the two imaging units 121 are symmetrically arranged along a first direction and corresponding to the weld beads at both ends of the battery cell 01 along the first direction, and the first direction refers to the extension direction of the conveying path of the battery cell 01.

By way of example, with reference to FIG. 9, in terms of the prismatic battery cell, the weld bead between the top cover and the case is rectangular, including two opposite long-side weld beads and two opposite short-side weld beads.

With reference to FIG. 9, the conveying path of the battery cell 01 is arranged to be parallel to the length direction of the battery cell 01. The two imaging units 121 of the imaging module are arranged with respect to the two opposite weld beads of the battery cell 01.

In this way, the two imaging units 121 of the imaging module are utilized to simultaneously detect two opposite weld beads of one battery cell 01, thus improving the testing efficiency of weld bead.

On basis of the above, in some embodiments of the present disclosure, the planar imaging assembly 12 includes at least two imaging modules, and the imaging modules are arranged along a second direction to simultaneously test the weld beads of at least two battery cells 01; and the second direction is perpendicular to the first direction.

It is to be noted that in the embodiments of the present disclosure, the number of the imaging modules is not limited, two vehicle modules are provided, or more than two imaging modules are provided.

By way of example, in terms of prismatic batteries, the first direction refers to the length direction of the battery cell 01, so the second direction refers to the length direction of the battery cell 01. It is to be understood that at least two battery cells 01 are arranged corresponding to the imaging modules on the conveying mechanism 2.

It is to be noted that the number of the battery cells 01 on the conveying mechanism 2 is set to match the number of the imaging modules, and the battery cells 01 correspond to the imaging modules one by one.

By means of the above arrangement, the first testing mechanism 1 in the embodiments of the present disclosure is utilized to simultaneously test at least two battery cells 01, thereby further improving the testing efficiency of the weld bead.

On basis of the above, with reference to FIG. 7 and FIG. 9, in some embodiments of the present disclosure, the imaging units 121 located on the same side in all the imaging module along the first direction share the first light-emitting member 12121 and the second light-emitting member 12122.

It is to be noted that in the embodiments of the present disclosure, the sizes of the first light-emitting member 12121 and the second light-emitting member 12122 along the second direction are set relatively large, so that the first light-emitting member 12121 and the second light-emitting member 12122 covers all imaging units 121 located on the same side in the imaging module.

By means of the above arrangement, the number of the light-emitting members is reduced, thus facilitating the control to the first light-emitting member 12121.

In addition, in the embodiments of the present disclosure, the welding testing system further includes an attitude adjustment mechanism 3, and the attitude adjustment mechanism 3 is arranged between the welding mechanism and the first testing mechanism 1 and is configured to adjust an attitude of the battery cell 01 into the attitude required by the first testing mechanism 1 to test the battery cell 01.

It is to be understood that in the embodiments of the present disclosure, the attitude of the battery cell 01 when welded by the welding mechanism may differ from the attitude of the battery cell 01 when tested by the first testing mechanism 1. By way of example, when being welded by the welding mechanism, the battery cell 01 may be in a side placement position; and when being tested by the first testing mechanism 1, it may be needed to place the battery cell 01 vertically.

Therefore, the attitude adjustment mechanism 3 is arranged between the welding mechanism and the first testing mechanism 1 to adjust the attitude of the battery cell 01.

By way of example, with reference to FIG. 1 and FIG. 2, in some embodiments of the present disclosure, the attitude adjustment mechanism 3 is arranged to be a flipping mechanism 31. In this way, the flipping mechanism 31 is utilized to flip the battery cell 01, thus facilitating first testing mechanism 1 to test the battery cell 01.

It is to be noted that the attitude adjustment mechanism 3 may be configured to perform gripping-based adjustment of the battery cell 01, or it may be configured to perform snap-fitting-based adjustment of the battery cell 01, which is not limited in the embodiments of the present disclosure.

By means of the above arrangement, in the welding testing system provided in the embodiment of the present disclosure, the attitude adjustment mechanism 3 is arranged and configured to adjust the attitude of the battery cell 01, thus facilitating the first testing mechanism 1 to test the weld beads of the battery cell 01.

In addition, with reference to FIG. 1, FIG. 2, FIG. 3, and FIG. 4, in some embodiments of the present disclosure, the testing mechanism further includes a first identification assembly 13 which is configured to acquire identification information of the battery cell 01; and the first identification assembly 13 is electrically connected to the processing assembly, and the processing assembly is also configured to match the identification information of the battery cell 01 with the testing result for the weld bead.

It is to be understood that the identification information of the battery cell 01 is configured to represent the identity information of the battery cell 01, each battery cell 01 has unique identification information. It is to be noted that in the embodiments of the present disclosure, the way the identification information of the battery cell 01 is represented is not limited, by way of example, the identification information of the battery cell 01 is represented as a string of numbers, and additionally, the identification information of the battery cell 01 is represented by QR codes or barcodes.

The identification information of the battery cell 01 is represented by the QR codes or barcodes, and thus the first identification assembly 13 is set using a barcode scanner.

The first identification module 13 is electrically connected to the processing assembly, and thus the processing assembly records the identification information of the battery cell 01.

It is to be understood that the processing assembly is also utilized to record the testing result for the weld bead in the battery cell 01. In this way, the processing assembly matches the identification information of the battery cell 01 with the testing result for the weld bead of the battery cell 01, thereby determining whether the testing result for the weld bead corresponding to battery cell 01 is qualified.

By means of the above management, in the welding testing system provided in the embodiments of the present disclosure, the first identification assembly 13 is arranged to recognize the identification information of the battery cell 01 and match the testing result for the weld bead of the battery cell 01 with the identification information of the battery cell 01, thus facilitating recording of the testing result for the weld bead of the battery cell 01.

On basis of the above, with reference to FIG. 1 and FIG. 2, in some embodiments of the present disclosure, the welding testing system further includes a second testing mechanism 4, and the second testing mechanism 4 is arranged downstream of the first testing mechanism 1 and is equipped with a waste discharge mechanism; and the second testing mechanism 4 includes a second identification assembly 41 which is electrically connected to the processing assembly. Before the second testing mechanism 4 tests the battery cell 01, the second identification assembly 41 confirms the identification information of the battery cell 01; and if the weld bead corresponding to the identification information of the battery cell 01 does not pass the test, the processing assembly controls the second testing mechanism 4 not to test the battery cell 01, and the battery cell 01 is discharged through the waste discharge mechanism.

It is to be noted that in the embodiments of the present disclosure, the type of the second testing mechanism 4 is not limited; by way of example, the second testing mechanism 4 is arranged to be a helium leak detection mechanism which detects the sealing of the battery cell 01.

It is to be noted that the identification information of the battery cell 01 is represented by the QR codes or barcodes, and thus the second identification assembly 41 is set using a barcode scanner.

Thus, if the second identification assembly 41 confirms the identification information of the battery cell 01, and the result corresponding to the recognition information of the battery cell 01 shows that the weld bead testing results from the first testing mechanism 1 are unqualified, the processing assembly controls the second testing mechanism 4 not to test the battery cell 01, and the battery cell 01 is discharged through the waste discharge mechanism; and if the result corresponding to the identification information of the battery cell 01 shows that the weld bead testing results from the first testing mechanism 1 are qualified, the processing assembly controls the second testing mechanism 4 to perform normal testing on the battery cell 01.

It is to be noted that in the embodiments of the present disclosure, the specific structural form of the waste discharge mechanism is not limited; and the waste discharge mechanism is arranged to be a discharge slot in the second testing mechanism 4.

By means of the above arrangement, in the embodiments of the present disclosure, if the weld bead testing result for the battery cell 01 are unqualified, the battery cell 01 is discharged through the waste discharge mechanism, thus improving the testing efficiency of the second testing mechanism 4.

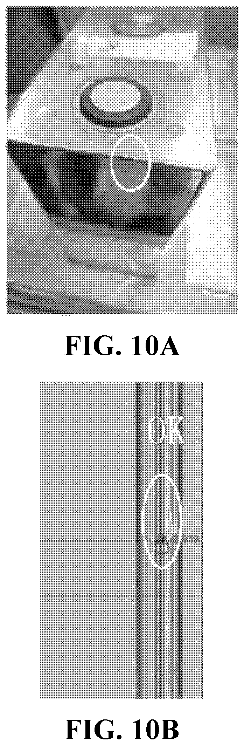

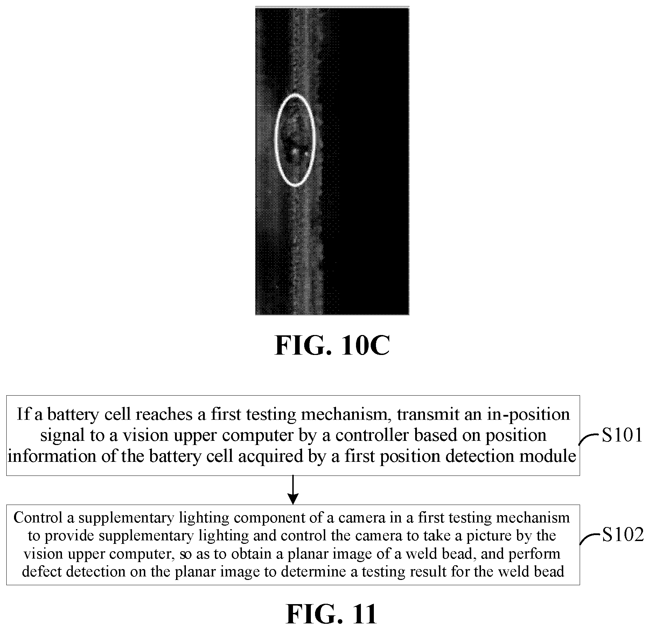

In existing technology, a 3D line-scan cameras is utilized to decode reflected laser from a testing region to obtain images with height information; the 3D images are utilized to identify a weld bead region; if the weld bead surface shows height information above or below the reference and outside the testing specifications, it is determined that a defect exists, and meanwhile, an algorithm in combination with defect morphology is utilized to identify the type of defect; due to the imaging principle limitations of the 3D camera, the grayscale features of the defects are not obvious, which easily result in missed battery cells, namely, the battery cells with defects are not detected. The missed battery cells are shown in FIG. 10A; the 3D line-scan camera decodes the reflected laser from the testing region to obtain the images with height information, as shown in FIG. 10B, the grayscale image presented by the 3D camera is shown in FIG. 10C.

The embodiment of the present disclosure provides a defect detection method, FIG. 11 is an optional flowchart I of a defect detection method provided by an embodiment of the present disclosure, as shown in FIG. 11, the defect detection method includes the following steps: S101: if the battery cell reaches the first testing mechanism, transmit an in-position signal to the vision upper computer by the controller based on the position information of the battery cell acquired by the first position detection module.

In some embodiments of the present disclosure, through-beam sensors are arranged on both sides of a belt corresponding to a detection station on the conveying mechanism 2. A first through-beam sensor in the through-beam sensors is arranged near the attitude adjustment mechanism 3; and a second through-beam sensor is arranged in the middle of the detection station.

In some embodiments of the present disclosure, once the battery cell 01 moves to the first testing mechanism 1, the position information of the battery cell 01 is obtained through the through-beam sensors.

In some embodiments of the present disclosure, after the battery cell 01 moves to the attitude adjustment mechanism 3 and the attitude adjustment mechanism 3 flips the battery cell 01, the battery cell 01 continues to move; once the battery cell 01 moves to the first testing mechanism 1, the controller transmits the in-position signal to the vision upper computer based on the position information of the battery cell 01 acquired by the through-beam sensors of the first testing mechanism 1; and the sensor information of the battery cell 01 is acquired through the through-beam sensors.

In some embodiments of the present disclosure, as the battery cell 01 just reaches the first testing mechanism 1, the first through-beam sensor acquires first sub-sensor information; the battery cell 01 continues to move, and once the battery cell 01 fully reaches the first testing mechanism 1, the second through-beam sensor acquires second sub-sensor information; and both the first sub-sensor information and the second sub-sensor information belong to the position information of the battery cell 01.

S102: control the supplementary lighting component of the camera in the first testing mechanism to provide supplementary lighting and control the camera to take a picture by the vision upper computer, so as to obtain a planar image of a weld bead, and perform defect detection on the planar image to determine the testing result for the weld bead.

In some embodiments of the present disclosure, the camera 1211 is a 2D camera 1211.

In some embodiments of the present disclosure, after obtaining the position information of the battery cell 01, it indicates that the battery cell 01 reaches a capturing position, the vision upper computer controls the supplementary lighting component 1212 of the camera 1211 in the first testing mechanism 1 to provide supplementary lighting and control the camera 1211 to take a picture, thus obtaining the planar image of the weld bead.

In some embodiments of the present disclosure, the vision upper computer performs defect detection on the planar image to determine the testing result for the battery cell 01.

In some embodiments of the present disclosure, the vision upper computer performs defect detection on planar images by a preset defect detection model so as to determine the testing result for the weld bead.

It is to be noted that the planar image of the battery cell 01 is an edge planar image of the battery cell 01 and displays the surface features of the battery cell 01.

It is to be understood that, based on sensor information, an in-position signal is transmitted to the host computer by the controller, and the host computer controls the supplementary lighting component 1212 to provide supplementary lighting and the camera 1211 to take a picture, thus obtaining the planar image of the battery cell 01; since the planar image of the battery cell 01 is obtained by combining the supplementary lighting component 1212 and the camera 1211, the features of the planar image are more comprehensive and clearer.

In some embodiments of the present disclosure, the vision upper computer preprocesses the planar image by the preset defect detection model to obtain at least one piece of defect information; defect information fusing is performed on at least one piece of defect information to obtain fused information; and based on the fusion information, the defect detection is performed to determine the testing result for the weld bead.

In some embodiments disclosed, the preset defect detection model is based on artificial intelligence detection algorithms. Neural networks are used in the artificial intelligence detection algorithms, the neural networks are a research hotspot in the field of artificial intelligence since the 1980s. It abstracts the neural networks of the human brain from an information processing perspective, establishes a simple model, and forms different networks according to different connection methods. In engineering and academia, it is often simply referred to as neural networks or neural networks. The neural networks are a computational model composed of a large number of nodes (or neurons) interconnected. Each node represents a specific output function, called an activation function. Every connection between two nodes represents a weighted value for the signal passing through that connection, called a weight, which is equivalent to the memory of the artificial neural network. The network output varies depending on the network connection method, weight values, and incentive functions. The network itself is usually an approximation of a natural algorithm or function, or it may also be an expression of a logical strategy.

In some embodiments of the present disclosure, the preset defect detection model is obtained by annotating a large number of various defect images and then training an initial defect detection model.

It is to be noted that defect detection mainly involves short-side post-weld defects in the planar image of the battery cell 01.

It is to be understood that if the battery cell 01 reaches the first testing mechanism 1, the controller transmits the in-position signal to the vision upper computer based on the position information of the battery cell 01 acquired by the first position detection module of the first testing mechanism 1; the vision upper computer controls the supplementary lighting component 1212 of the camera 1211 in the first testing mechanism 1 to provide supplementary lighting and controls the camera 1211 to take the pictures to obtain the planar image of the weld bead, and performs defect detection on the planar image to determine the testing result for the weld bead. In this process, by means of controlling the supplementary lighting component 1212 to provide supplementary lighting and controlling the camera 1211 to take a picture, better planar images of the battery cell 01 are obtained, the missed battery cells 01 are effectively inspected, thus preventing the NG battery cells from continuously moving downstream to cause safety risks, and improving the accuracy of defect detection.

In some embodiments of the present disclosure, the first testing mechanism 1 includes: a first identification assembly 13; the defect detection method further includes: conveying the battery cell 01 to the attitude adjustment mechanism 3 through the conveying mechanism 2, and after flipping the battery cell into position by the attitude adjustment mechanism 3, transmitting control information to the vision upper computer; and controlling the first identification assembly 13 by the vision upper computer to scan, so as to acquire the identification information of the battery cell 01.

In some embodiments of the present disclosure, the battery cell 01 is conveyed to the attitude adjustment mechanism 3 by the conveying mechanism 2; after the attitude adjustment mechanism 3 flips the battery cell into position, the controller transmits the control information to the vision upper computer, and then the vision upper computer controls the first identification assembly 13 to scan a code, so as to acquire the identification information of the battery cell 01.

It is to be understood that, by means of the steps of conveying the battery cell 01 to the attitude adjustment mechanism 3 through the conveying mechanism 2, and after flipping the battery cell into position by the attitude adjustment mechanism 3, transmitting the control information to the vision upper computer, and controlling the first identification assembly 13 by the vision upper computer to scan, so as to acquire the identification information of the battery cell 01, the identification information of the battery cell 01 is conveniently updated subsequently.

In some embodiments of the present disclosure, the welding testing system includes: a production control device; the defect detection method further includes: displaying the testing result for the battery cell 01 by the vision upper computer and transmitting the testing result for the battery cell 01 to the production control device; reading the identification information of the battery cell 01 by the production control device; and based on the testing result for the battery cell 01 and the identification information of the battery cell 01, updating the identification information of the battery cell 01 to obtain a product identification code carrying the testing result.

It is to be understood that by means of displaying the testing result for the battery cell 01 by the vision upper computer, the testing results are visualized, and the testing result for the battery cell 01 are transmitted to the production control device; the production control device reads the identification information of the battery cell 01; and based on the testing result for the battery cell 01 and the identification information of the battery cell 01, the identification information of the battery cell 01 is updated to obtain the product identification code carrying the detection result, and therefore, the second testing mechanism 4 conveniently scans the codes to acquire the testing results.

Before performing S101, S103 is also carried out, as follows:
S103: transmit the battery cell to the attitude adjustment mechanism through the conveying mechanism, and after flipping the battery cell into position by the attitude adjustment mechanism, convey the battery cell to the first testing mechanism through the conveying mechanism.

In some embodiments of the present disclosure, the first testing mechanism 1 includes: a first identification assembly 13.

In some embodiments of the present disclosure, the battery cell 01 is conveyed to the attitude adjustment mechanism 3 through the conveying mechanism 2, and after flipping the battery cell into position by the attitude adjustment mechanism 3, the battery cell 01 to the first testing mechanism 1 through the conveying mechanism 2.

In some embodiments of the present disclosure, the battery cell 01 is conveyed to the attitude adjustment mechanism 3 by the conveying mechanism 2; and after the battery cell is flipped into position by the attitude adjustment mechanism 3, the controller and the host computer control the first identification assembly 13 to scan the code to obtain the identification code of battery cell 01.

In some embodiments of the present disclosure, the battery cell 01 is conveyed to the attitude adjustment mechanism 3 through the conveying mechanism 2; and after the battery cell is flipped into position by the attitude adjustment mechanism 3, the control information is transmitted to the vision upper computer, and the vision upper computer controls the first identification assembly 13 to scan to acquire the identification information of the battery cell 01.

In some embodiments of the present disclosure, each battery cell 01 has a corresponding identification code for marking the battery cell 01.

In some embodiments of the present disclosure, the welding testing system includes: a second testing mechanism 4; the second testing mechanism 4 is located on the conveying mechanism 2 and behind the first testing mechanism 1.

In some embodiments of the present disclosure, S102 also includes S104, as follows: S104: if the battery cell is conveyed to the second testing mechanism through the conveying mechanism, determine the processing on the battery cell by the second testing mechanism based on the testing result for the battery cell.

In some embodiments of the present disclosure, if the battery cell 01 is conveyed to the second testing mechanism 4 through the conveying mechanism 2, the second testing mechanism 4 scans the product identification code of the battery cell 01 to obtain an abnormal result or normal result for the battery cell 01; according to the abnormal result for the battery cell 01, the battery cell 01 is discharged from the waste discharge mechanism of a helium leak tester; or, according to the normal result for the battery cell 01, helium leak test is performed on the battery cell 01.

In some embodiments of the present disclosure, if the battery cell 01 is conveyed to the second testing mechanism 4 through the conveying mechanism 2, the product identification code of the battery cell 01 is scanned by the second testing mechanism 4 to obtain abnormal testing result for the battery cell 01, and the abnormal cell 01 is discharged from the waste discharge mechanism of the helium leak tester.

In some embodiments of the present disclosure, if the battery cell 01 is conveyed to the second testing mechanism 4 through the conveying mechanism 2, the product identification code of the battery cell 01 is scanned by the second testing mechanism 4 to obtain the normal testing result for the battery cell 01, and helium leak test is performed on the normal battery cell 01.

It is to be understood that the product identification code of the battery cell 01 is scanned by the second testing mechanism 4 to obtain an abnormal result or normal result for the battery cell 01; according to the abnormal result for the battery cell 01, the battery cell 01 is discharged from the waste discharge mechanism of the helium leak tester; or, according to the normal result for the battery cell 01, helium leak test is performed on the battery cell 01, thus the missed battery cells 01 are effectively detected, and preventing the NG battery cells from continuously moving downstream to cause safety risks.

In some embodiments of the present disclosure, the defect detection method further includes: if the battery cell 01 reaches the first testing mechanism 1, triggering the first driving member 122 by the controller to extend to block the sliding of the battery cell 01, the first driving member 122 being located on the conveying mechanism 2; and if the battery cell 01 does not reach the first testing mechanism 1, triggering the first driving member 122 by the controller to retract to slide the battery cell 01.

In some embodiments of the present disclosure, if the battery cell 01 does not reach the first testing mechanism 1, the controller triggers the first driving member 122 to retract to slide the battery cell 01; and if the battery cell 01 reaches first testing mechanism 1, the controller triggers the first driving member 122 to extend to block the sliding of the battery cell 01, such that the position of the battery cell 01 is fixed.

It is to be understood that if the battery cell 01 reaches the first testing mechanism 1, the controller triggers the first driving member 122 to extend so as to block the sliding of the battery cell 01, thus the battery cell 01 is fixed, subsequent image collection of the battery cell 01 is facilitated, and the image quality of the battery cell 01 is improved.

In the embodiments of the present disclosure, after S102, the image of the battery cell is also saved to the production control device.

In some embodiments of the present disclosure, saving the image of the battery cell 01 to the production control device facilitates subsequent extraction of the image of the battery cell 01 for data analysis.

In the embodiments of the present disclosure, before S102, S105-S107 are also carried out, as follows:
S105: acquire the planar images of a plurality of weld bead samples by the vision upper computer.

In some embodiments of the present disclosure, the vision upper computer acquires the planar images of the plurality of weld bead samples, the planar images of the plurality of weld bead samples contain defects of different types; and for each type of defect, there is at least one planar image of the sample cell 01.

It is to be noted that the planar images of the plurality weld bead samples are collected in the run-in period.

S106: perform preprocessing and defect annotation on the planar images of the plurality weld bead samples respectively to obtain corresponding sample defect information of the planar images of the plurality of weld bead samples.

In some embodiments of the present disclosure, the planar images of the plurality of weld bead samples are preprocessed respectively to obtain the preprocessed planar images of the plurality of weld bead samples, and then defect annotation is performed on preprocessed planar images of the weld bead samples, thus obtaining the corresponding sample defect information of the planar images of the plurality of weld bead samples.

In some embodiments of the present disclosure, the defect annotation on the preprocessed planar images of the plurality of weld bead samples is performed by algorithm engineers.

It is to be noted that the corresponding sample defect information of the planar images of the plurality of weld bead samples is the corresponding defect types of the planar images of the plurality of weld bead samples.

S107: based on the corresponding sample defect information of the planar images of the plurality of weld bead samples, train the initial defect detection model to determine the preset defect detection model.

In some embodiments of the present disclosure, a mapping relationship between defects and detection specifications is determined by based on the corresponding the defect information of the planar images of the plurality of weld bead samples; defect learning for the annotated images is carried out based on the mapping relationship between the defects and the detection specifications; based on the defect learning for the images and the corresponding sample defect information of the planar images of the plurality of weld bead samples, the initial defect detection model is trained to determine the preset defect detection model.

In some embodiments of the present disclosure, based on the corresponding defect information of the planar images of the plurality of weld bead samples, the defect types and the detection specifications are matched one by one to determine the mapping relationship between the defects and the detection specifications; defect learning for the annotated images is carried out based on the mapping relationship between the defects and the detection specifications; based on the defect learning for the images and the corresponding sample defect information of the planar images of the plurality of weld bead samples, the initial defect detection model is trained to determine the preset defect detection model.

In some embodiments of the present disclosure, during training the initial defect detection model to determine the preset defect detection model, if an output value of the initial defect detection model exceeds a preset threshold, the model is outputted to obtain the preset defect detection model; and if the output value of the initial defect detection model does not exceed the preset threshold, training continues until the output of the initial defect detection model exceeds the preset threshold, then training is stopped, and the model is outputted to obtain the preset defect detection model.

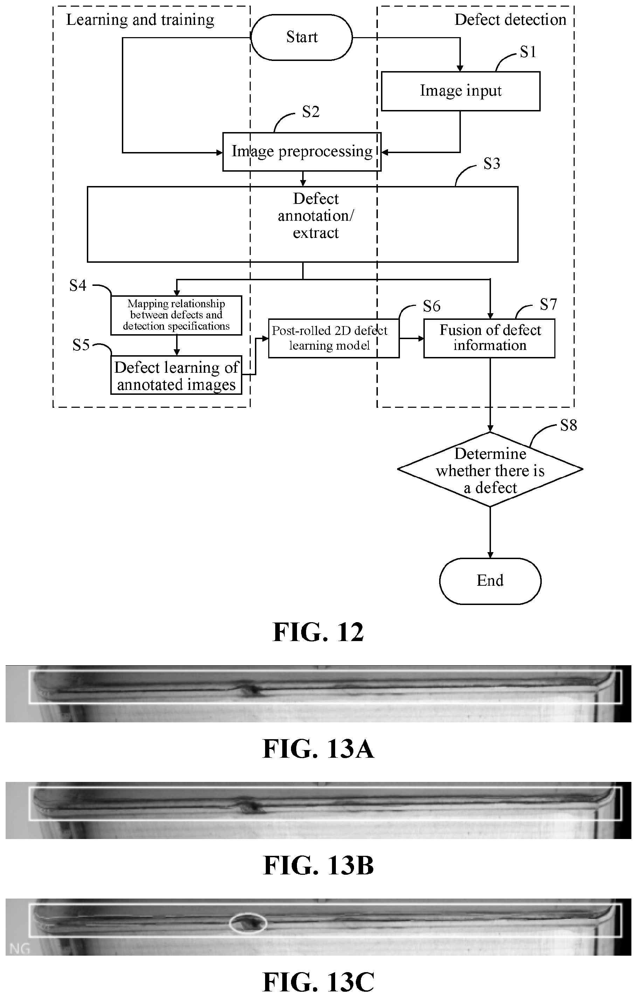

By way of example, the short-edge post-weld defect detection is performed by identifying and classifying using artificial intelligence detection algorithms; first, a large number of defect images are collected in the run-in period, and the algorithm engineers annotate the defect type for each image before providing to an algorithm model for training; and after training, a short-edge rolled 2D detection model is obtained, namely, the preset defect detection model. As shown in FIG. 12, during learning and training to determine the preset defect detection model, the following steps are sequentially carried out: S2: image preprocessing; S3: defect annotating/ extracting: S4: obtaining of the mapping relationship between the defects and the detection specifications; and S5: defect learning for annotated images to determine the post-rolled 2D defect learning model. During defect detection, the following steps are sequentially carried out: S1: image input; S2: image preprocessing; S3: defect annotation/ extraction; S7: defect information fusion; and S8: determination to presence of defects.

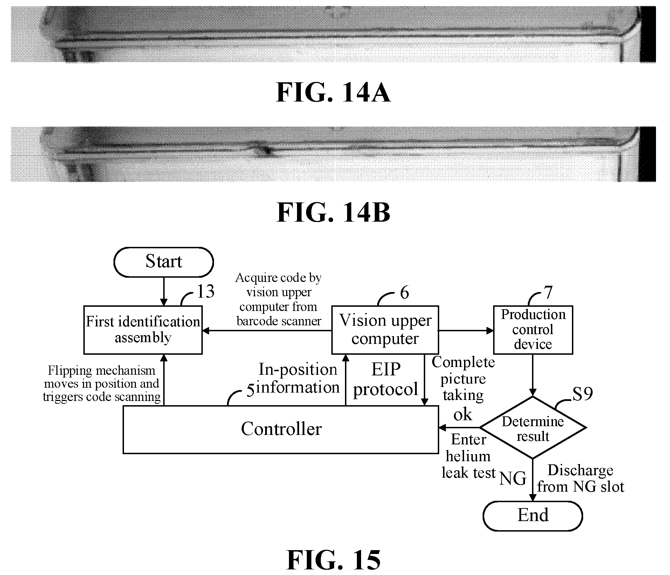

It is to be noted that the post-rolled 2D defect learning model is the preset defect detection model; after defect annotation/extraction, a defect 1, a defect 2, a defect 3, and a defect 4 are obtained. During learning and training, S3 of defect annotation is carried out; during defect detection, S3 of defect extraction is carried out. During actual detection, the camera 1211 collects the images and transmits back to host computer software by network, then the images are transmitted to the algorithmic artificial intelligence model. After image input, simple image preprocessing (such as filtering) is performed, it is loaded into an ROI box (such as the region of interest), and a weld bead body is positioned in the ROI box based on differences in grayscale value; and finally, the artificial intelligence detection algorithm is utilized to determine the presence and type of defects in the weld bead body region based on the mapping relationship between the defects and the specifications as well as the defect features. The loading into ROI box is shown in FIG. 13A, the positioning the weld bead body according to differences in grayscale values is shown in FIG. 13B, and the determining the defects by the artificial intelligence detection algorithm is shown in FIG. 13C. Additionally, the planar image was detected based on the preset defect detection model, and the testing results are shown in FIG. 14A and FIG. 14B.

It is to be understood that the planar images of a plurality of historical battery cells 01 are acquired; image preprocessing and defect annotation are performed on the planar images of plurality of historical battery cells 01 to obtain the corresponding defect information of the planar images of the plurality of historical cells 01; based on the corresponding defect information of the planar images of the plurality of historical cells 01, the initial defect detection model is trained to determine the preset defect detection model, thereby improving the testing accuracy of the preset defect detection model.

In some embodiments of the present disclosure, FIG. 15 is an optional flowchart II of a defect detection method provided by an embodiment of the present disclosure; as shown in FIG. 15, the defect detection method includes: moving the battery cell 01 from a top cover welding discharge port to the attitude adjustment mechanism 3; after the flipping mechanism is in place, controlling the first identification assembly 13 by the controller 5 and the vision upper computer 6 to scan the code, and saving the scanning results locally; and reading the scanning results by the vision upper computer 6 and production control device 7. After the vision upper computer receives the scanning results, S9 of determining the results is carried out; the product code carries either OK or NG information; if OK, helium leak test is carried out; if NG, the battery cell is discharged directly from an NG slot of the helium leak tester. The first identification assembly 13 is controlled by the controller 5 and the vision upper computer 6 to scan the code under the condition that the attitude adjustment mechanism 3 is in place and triggers code scanning; after scanning the code, the vision upper computer 6 acquires the code from the first identification assembly 13. After acquiring the code, the vision upper computer 6 receives the in-position signal from controller 5 by the EIP protocol, controls camera 1211 to take a picture, and transmits the results to controller 5 after taking pictures.

It is to be noted that the NG slot of the helium leak tester is the waste discharge mechanism. After being scanned, battery cell 01 moves to the detection station; one of two through-beam sensors on both sides of conveying mechanism 2 is arranged near the flipping machine position, and another one is arranged in the middle to sense and transmit to the controller; after the battery cell 01 is in place, the controller triggers to block the first driving member 122 from extending, while the controller transmits the in-position signal to the vision upper computer, and the vision upper computer controls the supplementary lighting component 1212 to provide supplementary lighting and triggers the camera 1211 to take a picture to transmit to an industrial control computer. After taking the pictures, the host computer returns a controller end signal, the first driving member 122 retracts, and the controller triggers the conveying mechanism 2 to start to the convey battery cell 01 to the next station. During this process, after the image is fed back and algorithm detection is completed, the results are uploaded to the production control device for interaction with the vision upper computer; if OK, the battery cell 01 is subjected to helium leak test as usual, and the product code carries OK or NG information; the helium leak tester scans the code to decide whether to detect or discharge; and if NG, the battery cell is directly discharged from the NG slot of the helium leak tester.

It is to be understood that by controlling the supplementary lighting component 1212 to provide supplementary lighting and the camera 1211 to take a picture, better image of the battery cell 01 is obtained, the missed battery cells 01 are effectively inspected, thus preventing the NG battery cells from continuously moving downstream to cause safety risks, and improving the accuracy of defect detection.

In order to implement the defect detection method provided by the present disclosure, a welding testing system is provided; as shown in FIG. 2, the welding testing system 10 includes: the conveying mechanism 2, the attitude adjustment mechanism 3, and the first testing mechanism 1.

The conveying mechanism 2 is configured to convey the battery cell 01;
the attitude adjustment mechanism 3 is configured to flip the battery cell 01 on the conveying mechanism 2;
the first position detection modules are arranged on both sides of the belt corresponding to the first testing mechanism 1 on the conveying mechanism 2 and is configured to detect whether the battery cell 01 approaches and/or reaches the first testing mechanism 1;
the first testing mechanism 1 is provided with the processing assembly, thee supplementary lighting component 1212, and the camera 1211 and is configured to acquire the planar image of the weld bead of the battery cell 01; the processing assembly includes the controller and the vision upper computer; the controller is configured to transmit the in-position signal to the vision upper computer based on the position information of the battery cell 01 acquired by the first position detection module; the vision upper computer is configured to: respond to the in-position signal, control the supplementary lighting component 1212 of the camera 1211 in the first testing mechanism 1 to provide supplementary lighting and control the camera 1211 to take a picture, and perform defect detection on the planar image of the weld bead to determine the testing results.

In some embodiments of the present disclosure, the first testing mechanism 1 includes:
the first identification module 13 which is configured to scan the code on battery cell 01 to acquire the identification information of the battery cell 01;
the vision upper computer is also configured to: respond to the control information transmitted by the attitude adjustment mechanism 3 after the battery cell 01 is flipped into position, control the first identification assembly 13 to scan the code.

In some embodiments of the present disclosure, the welding testing system 10 further includes:
the production control device which is configured to read the identification information of the battery cell 01, and based on the testing result for the battery cell 01 and the identification information of the battery cell 01, update the identification information of the battery cell 01 to obtain the product identification code carrying the testing result; and
the vision upper computer is also configured to display the testing result for the battery cell 01 and to transmit the testing result for the battery cell 01 to the production control device.

In some embodiments of the present disclosure, the welding testing system 10 further includes:
the second testing mechanism 4; the second testing mechanism 4 is located on the conveying mechanism 2 and behind the first testing mechanism 1, and is configured to determine the processing on the battery cell 01 based on the testing result for the battery cell 01.

In some embodiments of the present disclosure, the second testing mechanism 4 is also configured to scan the product identification code of the battery cell 01 to obtain an abnormal result or normal result for the battery cell 01;

The second testing mechanism 4 is also configured to discharge the battery cell 01 from the waste discharge mechanism of the helium leak tester based on the abnormal result for the battery cell 01, or perform helium leak test on the battery cell 01 based on the normal result for the battery cell 01.

In some embodiments of the present disclosure, the welding testing system 10 further includes: the first driving member 122 which is located on the conveying mechanism 2;
the controller is also configured to, if sensing that the battery cell 01 reaches the first testing mechanism 1, trigger the first driving member 122 to extend so as to block the sliding of the battery cell 01, or, if sensing that the first driving member 01 does not reach the first testing mechanism 1, trigger the first driving member 122 to retract to slide the battery cell 01.

In some embodiments of the present disclosure, the first position detection module includes: the first through-beam sensor and the second through-beam sensor; in which, the first through-beam sensor is arranged near the attitude adjustment mechanism 3, and the second through-beam sensor is arranged in the middle of the detection station;
the first through-beam sensor is configured to, if sensing that the battery cell 01 approaches the first testing mechanism 1, acquire the first sub-sensor information;
the second through-beam sensor is configured to, if sensing that the battery cell 01 completely reaches the first testing mechanism 1, acquire the second sub-sensor information; and both the first sub-sensor information and second sub-sensor information belong to the position information of the battery cell.

In some embodiments of the present disclosure, the vision upper computer is further configured to: perform image preprocessing on the planar image through the preset defect detection model so as to obtain at least one piece of defect information, perform defect information fusion on the at least one piece of defect information to obtain fused information, and based on the fused information, perform defect detection to determine the testing result for the weld bead.

In some embodiments of the present disclosure, the vision upper computer is further configured to: acquire the planar images of the plurality of weld bead samples;
performing preprocessing and defect annotation on the planar images of the plurality of weld bead samples respectively to obtain corresponding sample defect information of the planar images of the plurality of weld bead samples; and
based on the corresponding sample defect information of the planar images of the plurality of weld bead samples, train the initial defect detection model to determine the preset defect detection model.

In some embodiments of the present disclosure, the production control device is further configured to: based on the corresponding sample defect information of the planar images of the plurality of weld bead samples, determine the mapping relationship between the defects and the detection specifications;
based on the mapping relationship between the defects and the detection specifications, performing defect learning on annotated images; and
based on the defect learning for the images and the corresponding sample defect information of the planar images of the plurality of weld bead samples, training the initial defect detection model to determine the preset defect detection model.

The above embodiments are only used for illustrating the technical solutions of the present disclosure, and are not limited to them; although the present disclosure has been described in detail with reference to the foregoing embodiments, those of ordinary skill in the art should understand that it may still modify the technical solutions described in the foregoing embodiments, or replace some or all of the technical features therein; these modifications or substitutions do not make the essence of the corresponding technical solutions out of the scope of the technical solutions of each embodiment of the present disclosure, and they shall be covered within the scope of the present disclosure. In particular, the technical features mentioned in the various embodiments are combined in any manner as long as there is no structural conflict. The present disclosure is not limited to the specific embodiments disclosed herein, but rather includes all technical solutions falling within the scope of the present disclosure.

## Claims

1. A welding testing system, comprising:
a welding mechanism which is configured to weld a battery case and a top cover of a battery cell together;
a first testing mechanism which is arranged downstream of the welding mechanism and is configured to test a weld bead between the welded battery case and top cover, wherein
the first testing mechanism comprises a support assembly, a planar imaging assembly, and a processing assembly; the planar imaging assembly is mounted to the support assembly and is configured to capture a planar image at the weld bead; the processing assembly is configured to acquire the planar image and determine whether the weld bead is qualified on the basis of the planar image;
the planar imaging assembly comprises an imaging unit; the imaging unit comprises a camera and a reflective mirror; the camera and a testing position of the first testing mechanism are located on the same side of the reflective mirror; and a lens of the camera faces the reflective mirror; and if the battery cell is located at the testing position, the camera captures a reflective image of the weld bead reflected by the reflective mirror.

2. The welding testing system according to claim 1, wherein the imaging unit further comprises a supplementary lighting component which is configured to provide supplementary lighting for the weld bead.

3. The welding testing system according to claim 2, further comprising a conveying mechanism which is configured to convey the battery cell to the testing position and to convey the tested battery cell out from the testing position.

4. The welding testing system according to claim 3, wherein the supplementary lighting component comprises a first light-emitting member, the imaging unit further comprises a first driving member, a fixed end of the first driving member is fixedly connected to the support assembly, and an output end of the first driving member is connected to the first light-emitting member; the first driving member is configured to switch the first light-emitting member between a supplementary lighting position and a clearance position;
at the supplementary lighting position, the first light-emitting member extends into a conveying path of the battery cell to provide supplementary lighting for the weld bead; and
at the clearance position, the first light-emitting member is retracted from the conveying path of the battery cell to provide clearance for the conveying of the battery cell.

5. The welding testing system according to claim 4, wherein the conveying mechanism comprises a second driving member, a conveying member, and a first position detection module; the second driving member is configured to drive the conveying member to operate, the conveying member is configured to convey the battery cell, and the first position detection module is configured to detect the position of the battery cell; the first position detection module and the second driving member are electrically connected to the processing assembly; and
the processing assembly is also configured to control the imaging unit and the second driving member to operate based on the position of the battery cell.

6. The welding testing system according to claim 5, wherein
if the battery cell is at the testing position, the processing assembly controls the first driving member to drive the first light-emitting member to the supplementary lighting position and controls the second driving member to stop operating, the processing assembly controls the supplementary lighting component to provide supplementary lighting for the weld bead and controls the camera to capture the weld bead; and
after the planar imaging assembly captures the weld bead, the processing assembly controls the first driving member to drive the first light-emitting member to the clearance position, while the processing assembly controls the second driving member to continue to operate.

7. The welding testing system according to any one of claims 4 to 6, wherein the support assembly comprises a vertical support column arranged vertically, an upper mounting bracket and a lower mounting bracket which are arranged on the vertical support column; the upper mounting bracket is equipped with the planar imaging assembly, and the lower mounting bracket is equipped with the conveying mechanism.

8. The welding testing system according to claim 7, wherein the upper mounting bracket comprises a first mounting bracket and a camera mounting bracket; the first mounting bracket is fixedly connected to the vertical support column, and the camera mounting bracket is fixedly connected to the first mounting bracket; the first driving member is mounted to the first mounting bracket and is configured to drive the first light-emitting member to move vertically; the reflective mirror is fixedly connected to the lower end of the first mounting bracket; and
the conveying mechanism is configured to convey the battery cell horizontally.

9. The welding testing system according to claim 8, wherein the upper mounting bracket further comprises a second mounting bracket which is fixedly connected to the lower end of the camera mounting bracket;
the supplementary lighting component further comprises a second light-emitting member and a third light-emitting member; the second light-emitting member extends horizontally and is mounted at the lower end of the second mounting bracket;
two third light-emitting members are provided, and the two third light-emitting members extend vertically and are mounted at an interval below the second light-emitting member; and a space between the two third light-emitting members and the second light-emitting member forms the conveying path for the battery cell.

10. The welding testing system according to claim 9, wherein the first light-emitting member, the second light-emitting member, and the third light-emitting member all have a planar light-emitting surface.

11. The welding testing system according to claim 9 or 10, wherein a first adjustment structure is arranged between the first driving member and the first mounting bracket, and the first driving member adjusts the position vertically through the first adjustment structure; and/or, a second adjustment structure is arranged between the second mounting bracket and the camera mounting bracket, and the second mounting bracket adjusts the position vertically through the second adjustment structure.

12. The welding testing system according to any one of claims 9 to 11, wherein a third adjustment structure is arranged between the camera and the camera mounting bracket, and the camera adjusts the position along a lens orientation of the camera through the third adjustment structure; and/or, a fourth adjustment structure is arranged between the reflective mirror and the first mounting bracket, and the reflective mirror adjusts the position vertically through the fourth adjustment structure.

13. The welding testing system according to any one of claims 9 to 12, wherein a fifth adjustment structure is arranged between the third light-emitting member and the second light-emitting member, and the third light-emitting member adjusts the position horizontally through the fifth adjustment structure.

14. The welding testing system according to any one of claims 9 to 13, wherein the planar imaging assembly comprises imaging modules, each imaging module comprises two imaging units, the two imaging units are symmetrically arranged along a first direction and corresponding to the weld beads at both ends of the battery cell along the first direction, and the first direction refers to the extension direction of the conveying path of the battery cell.

15. The welding testing system according to claim 14, wherein the planar imaging assembly comprises at least two imaging modules, and the imaging modules are arranged along a second direction to simultaneously test the weld beads of at least two battery cells; and the second direction is perpendicular to the first direction.

16. The welding testing system according to claim 15, wherein the imaging units located on the same side in all the imaging module along the first direction share the first light-emitting member and the second light-emitting member.

17. The welding testing system according to any one of claims 3 to 16, further comprising an attitude adjustment mechanism, wherein the attitude adjustment mechanism is arranged between the welding mechanism and the first testing mechanism and is configured to adjust an attitude of the battery cell into the attitude required by the first testing mechanism to test the battery cell.

18. The welding testing system according to any one of claims 1 to 17, wherein the testing mechanism further comprises a first identification assembly which is configured to acquire identification information of the battery cell; and the first identification assembly is electrically connected to the processing assembly, and the processing assembly is also configured to match the identification information of the battery cell with the testing result for the weld bead.

19. The welding testing system according to claim 18, further comprising a second testing mechanism, wherein the second testing mechanism is arranged downstream of the first testing mechanism and is equipped with a waste discharge mechanism; the second testing mechanism comprises a second identification assembly which is electrically connected to the processing assembly;
before the second testing mechanism tests the battery cell, the second identification assembly confirms the identification information of the battery cell; and
if the weld bead corresponding to the identification information of the battery cell does not pass the test, the processing assembly controls the second testing mechanism not to test the battery cell, and the battery cell is discharged through the waste discharge mechanism.

20. A defect detection method, being applied to a welding testing system which comprises: a welding mechanism and a first testing mechanism, wherein
the first testing mechanism is arranged downstream of the welding mechanism, wherein the first testing mechanism comprises a support assembly, a planar imaging assembly, and a processing assembly; the planar imaging assembly is mounted on the support assembly, and the planar imaging assembly comprises an imaging unit; the imaging unit comprises a camera and a reflective mirror, the camera and a testing position of the first testing mechanism are located on the same side of the reflective mirror, and a lens of the camera faces the reflective mirror; the processing assembly comprises a vision upper computer and a controller;
the method comprises:
if the battery cell reaches the first testing mechanism, transmitting an in-position signal to the vision upper computer by the controller based on the position information of the battery cell acquired by the first position detection module;
controlling a supplementary lighting component of the camera in the first testing mechanism to provide supplementary lighting and controlling the camera to take a picture by the vision upper computer, so as to obtain a planar image of a weld bead, and performing defect detection on the planar image to determine a testing result for the weld bead.

21. The method according to claim 20, wherein the welding testing system further comprises:
an attitude adjustment mechanism; the first testing mechanism comprises: a first identification assembly;
the method further comprises:
conveying the battery cell to the attitude adjustment mechanism by the conveying mechanism, and after flipping the battery cell into position by the attitude adjustment mechanism, transmitting control information to the vision upper computer;
conveying the battery cell to the first testing mechanism through the conveying mechanism; and
controlling the first identification assembly by the vision upper computer to scan a code, so as to acquire the identification information of the battery cell.

22. The method according to claim 20 or 21, wherein the welding testing system comprises: a production control device;
the method further comprises:
displaying the testing result for the battery cell and transmitting the testing result for the battery cell to the production control device by the vision upper computer;
reading the identification information of the battery cell by the production control device; and
based on the testing result for the battery cell and the identification information of the battery cell, updating the identification information of the battery cell to obtain a product identification code carrying the testing result.

23. The method according to claim 20 or 21, wherein the welding testing system comprises: a second testing mechanism; the second testing mechanism is located on the conveying mechanism and behind the first testing mechanism;
the method further comprises:
if the battery cell is conveyed to the second testing mechanism by the conveying mechanism, determining the processing on the battery cell by the second testing mechanism based on the testing result for the battery cell.

24. The method according to claim 23, wherein the if the battery cell is conveyed to the second testing mechanism by the conveying mechanism, determining the processing on the battery cell by the second testing mechanism based on the testing result for the battery cell comprises:
if the battery cell is conveyed to the second testing mechanism by the conveying mechanism, scanning the product identification code of the battery cell by the second testing mechanism to obtain an abnormal result or normal result for the battery cell;
according to the abnormal result for the battery cell, discharging the battery cell from the waste discharge mechanism of a helium leak tester; or,
according to the normal result for the battery cell, performing helium leak test on the battery cell.

25. The method according to any one of claims 20 to 24, further comprising:
if the battery cell reaches the first testing mechanism, triggering a first driving member by the controller to extend so as to block the sliding of the battery cell, the first driving member being located on the conveying mechanism; and
if the battery cell does not reach the first testing mechanism, triggering the first driving member by the controller to retract to slide the battery cell.

26. The method according to any one of claims 20 to 25, wherein a first through-beam sensor in the first position detection module is arranged near the attitude adjustment mechanism; a second through-beam sensor is arranged in the middle of a detection station;
the method further comprises:
if the battery cell just reaches the first testing mechanism, acquiring first sub-sensor information by the first through-beam sensor;
continuously moving the battery cell until completely reaching the first testing mechanism, acquiring second sub-sensor information by the second through-beam sensor, and both the first sub-sensor information and second sub-sensor information belonging to the position information of the battery cell.

27. The method according to any one of claims 20 to 26, wherein the performing defect detection on the planar image to determine a testing result for the weld bead comprises:
performing image preprocessing on the planar image by the vision upper computer through a preset defect detection model so as to obtain at least one piece of defect information;
performing defect information fusion on the at least one piece of defect information to obtain fused information; and
based on the fused information, performing defect detection to determine the testing result for the weld bead.

28. The method according to any one of claims 20 to 27, further comprising:
acquiring the planar images of a plurality of weld bead samples by the vision upper computer;
performing preprocessing and defect annotation on the planar images of the plurality weld bead samples respectively to obtain corresponding sample defect information of the planar images of the plurality of weld bead samples; and
based on the corresponding sample defect information of the planar images of the plurality of weld bead samples, training an initial defect detection model to determine a preset defect detection model.

29. The method according to claim 28, wherein the based on the corresponding sample defect information of the planar images of the plurality of weld bead samples, training an initial defect detection model to determine the preset defect detection model comprises:
based on the corresponding sample defect information of the planar images of the plurality of weld bead samples, determining a mapping relationship between defects and detection specifications;
based on the mapping relationship between the defects and the detection specifications, performing defect learning on annotated images; and
based on the defect learning for the images and the corresponding sample defect information of the planar images of the plurality of weld bead samples, training the initial defect detection model to determine the preset defect detection model.

30. A welding testing system, comprising: a welding mechanism and a first testing mechanism, wherein
the first testing mechanism is arranged downstream of the welding mechanism, wherein the first testing mechanism comprises a support assembly, a planar imaging assembly, and a processing assembly; the planar imaging assembly is mounted on the support assembly, and the planar imaging assembly comprises an imaging unit; the imaging unit comprises a camera and a reflective mirror, the camera and a testing position of the first testing mechanism are located on the same side of the reflective mirror, and a lens of the camera faces the reflective mirror; the processing assembly comprises a vision upper computer and a controller;
the welding mechanism is configured to weld a battery case and a top cover of a battery cell together;
the controller is configured to transmit an in-position signal to the vision upper computer based on the position information of the battery cell acquired by a first position detection module when the battery cell reaches the first testing mechanism;
the vision upper computer is configured to: respond to the in-position signal, control a supplementary lighting component of the camera in the first testing mechanism to provide supplementary lighting and control the camera to take a picture, and perform defect detection on the planar image of a weld bead to determine a testing result for the weld bead.
